(19) Europäisches Patentamt
European Patent Office
Office européen des brevets

(11) **EP 3 905 694 A1**

(12) **EUROPEAN PATENT APPLICATION**
published in accordance with Art. 153(4) EPC

(43) Date of publication:
**03.11.2021 Bulletin 2021/44**

(51) Int Cl.:
**H04N 19/577** *(2014.01)*    **H04N 19/70** *(2014.01)*

(21) Application number: **19906111.0**

(22) Date of filing: **20.12.2019**

(86) International application number:
**PCT/JP2019/050202**

(87) International publication number:
**WO 2020/137920 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.12.2018 JP 2018245249**

(71) Applicants:
• **Sharp Kabushiki Kaisha**
**Sakai-shi**
**Osaka 590-8522 (JP)**
• **FG Innovation Company Limited**
**Hong Kong (CN)**

(72) Inventors:
• **CHUJOH, Takeshi**
**Sakai City, Osaka 590-8522 (JP)**
• **HASHIMOTO, Tomonori**
**Sakai City, Osaka 590-8522 (JP)**
• **AONO, Tomoko**
**Sakai City, Osaka 590-8522 (JP)**
• **IKAI, Tomohiro**
**Sakai City, Osaka 590-8522 (JP)**
• **SASAKI, Eiichi**
**Sakai City, Osaka 590-8522 (JP)**

(74) Representative: **Müller Hoffmann & Partner**
**Patentanwälte mbB**
**St.-Martin-Strasse 58**
**81541 München (DE)**

(54) **PREDICTION IMAGE GENERATING DEVICE, MOVING IMAGE DECODING DEVICE, MOVING IMAGE ENCODING DEVICE, AND PREDICTION IMAGE GENERATING METHOD**

(57)    NPL 2 describes prediction (BIO prediction) using BIO processing in which in a case that a prediction image is derived, a gradient image is utilized to achieve high image quality, and this prediction involves an assumption that pixel values are temporally constant. Thus, there is a problem in that a fade image in which a pixel value has a temporal variation or the like is not successfully processed. A bi-directional optical flow sample prediction process unit that generates a prediction image using a gradient image derived from two interpolation images derives interpolation images for determining an optical flow by using a weight coefficient and an offset coefficient decoded from coded data for weighted bi-prediction, and generates a prediction image.

FIG. 16

EP 3 905 694 A1

**Description**

Technical Field

An embodiment of the present invention relates to a prediction image generation apparatus, a video decoding apparatus, a video coding apparatus, and a prediction image generation method.

Background Art

A video coding apparatus which generates coded data by coding a video, and a video decoding apparatus which generates decoded images by decoding the coded data are used for efficient transmission or recording of videos.

Specific video coding schemes include, for example, H.264/AVC and High-Efficiency Video Coding (HEVC), and the like.

In such a video coding scheme, images (pictures) constituting a video are managed in a hierarchical structure including slices obtained by splitting an image, coding tree units (CTUs) obtained by splitting a slice, units of coding (coding units; which will be referred to as CUs) obtained by splitting a coding tree unit, and transform units (TUs) obtained by splitting a coding unit, and are coded/decoded for each CU.

In such a video coding scheme, usually, a prediction image is generated based on a local decoded image that is obtained by coding/decoding an input image (a source image), and prediction errors (which may be referred to also as "difference images" or "residual images") obtained by subtracting the prediction image from the input image are coded. Generation methods of prediction images include an inter-picture prediction (inter prediction) and an intra-picture prediction (intra prediction).

In addition, NPL 1 is exemplified as a recent technique for video coding and decoding. NPL 2 discloses a Bi-directional Optical Flow (BIO) technology that utilizes a gradient image to achieve high image quality in a case that a prediction image is derived from a bi-prediction motion compensation (interpolation image).

Citation List

Non Patent Literature

NPL 1: "Versatile Video Coding (Draft 3)", JVET-L1001, Joint Video Exploration Team (JVET) of ITU-T SG 16 WP 3 and ISO/IEC JTC 1/SC 29/WG 11, 2018

NPL 2: "CE9-related: Complexity reduction and bit-width control for bi-directional optical flow (BIO)", JVET-L0256, Joint Video Exploration Team (JVET) of ITU-T SG 16 WP 3 and ISO/IEC JTC 1/SC 29/WG 11, 2018

Summary of Invention

Technical Problem

NPL 2 describes prediction (BIO prediction) using BIO processing in which in a case that a prediction image is derived, a gradient image is utilized to achieve high image quality, and this prediction involves an assumption that pixel values are temporally constant. Thus, there is a problem in that a temporal variation in pixel value prevents a fade image or the like from being successfully dealt with.

Solution to Problem

An apparatus includes a bi-directional optical flow sample prediction process unit configured to generate a prediction image by using a gradient image derived from two interpolation images, and a weighted prediction unit configured to generate a weighted bi-prediction image from the two interpolation images by using a weight coefficient and an offset coefficient decoded from coded data, the bi-directional optical flow sample prediction process unit includes an L0 and L1 prediction image generation unit configured to generate, from the two interpolation images, an L0 prediction image and an L1 prediction image for each coding unit, a gradient image generation unit configured to generate, from the L0 prediction image and the L1 prediction image, four gradient images in a horizontal direction and a vertical direction, a correlation parameter calculation unit configured to calculate a correlation parameter for each processing unit, based on a product-sum operation of the L0 prediction image, the L1 prediction image, and the four gradient images, a motion compensation refinement value derivation unit configured to derive, from the correlation parameter, a value for refining a bi-prediction image, and a bi-directional optical flow sample prediction image generation unit configured to generate a prediction image from the L0 prediction image, the L1 prediction image, and the motion compensation refinement value, and the L0 and L1 prediction image generation unit generates a weighted L0 prediction image and a weighted L1 prediction image as the L0 prediction image and the L1 prediction image by using a weight coefficient and an offset coefficient used in the weighted bi-prediction image generation unit.

An apparatus includes a generalized bi-prediction generation unit configured to generate a weighted bi-prediction image by using two interpolation images and a weight coefficient derived with reference to a weight coefficient table prepared in advance, by using an index decoded from the coded data, and a weighted bi-prediction image generation unit configured to use the weight coefficient and offset coefficient decoded from the coded data, from the two interpolation images, and in a case that the index selects a one-to-one weight, the generalized bi-prediction generation unit uses the bi-prediction image generation unit to generate a bi-prediction image.

Advantageous Effects of Invention

According to the configuration described above, any of the above-described problems can be solved.

Brief Description of Drawings

FIG. 1 is a schematic diagram illustrating a configuration of an image transmission system according to the present embodiment.

FIG. 2 is a diagram illustrating configurations of a transmitting apparatus equipped with a video coding apparatus and a receiving apparatus equipped with a video decoding apparatus according to the present embodiment. (a) thereof illustrates the transmitting apparatus equipped with the video coding apparatus, and (b) thereof illustrates the receiving apparatus equipped with the video decoding apparatus.

FIG. 3 is a diagram illustrating configurations of a recording apparatus equipped with the video coding apparatus and a reconstruction apparatus equipped with the video decoding apparatus according to the present embodiment. (a) thereof illustrates the recording apparatus equipped with the video coding apparatus, and (b) thereof illustrates the reconstruction apparatus equipped with the video decoding apparatus.

FIG. 4 is a diagram illustrating a hierarchical structure of data of a coding stream.

FIG. 5 is a diagram illustrating a split example of a CTU.

FIG. 6 is a conceptual diagram illustrating an example of reference pictures and reference picture lists.

FIG. 7 is a schematic diagram illustrating a configuration of a video decoding apparatus.

FIG. 8 is a schematic diagram illustrating a configuration of an inter prediction parameter decoder.

FIG. 9 is a schematic diagram illustrating configurations of a merge prediction parameter derivation unit and an AMVP prediction parameter derivation unit.

FIG. 10 is a schematic diagram illustrating a configuration of an inter prediction image generation unit.

FIG. 11 is a diagram illustrating an example of a table gbwTable[] including a weight coefficient candidate used in a GBI prediction according to an embodiment.

FIG. 12 is a flowchart illustrating an example of a flow of selection processing for a prediction mode in a video decoding apparatus according to an embodiment.

FIG. 13 is a diagram illustrating an example of a flowchart describing a flow of processing by which a motion compensation unit including a motion compensation function using BIO prediction according to the present embodiment derives a prediction image.

FIG. 14 is a schematic diagram illustrating a configuration of a BIO unit according to the present embodiment.

FIG. 15 is a diagram illustrating an example of a region in which the BIO unit performs BIO padding according to the present embodiment.

FIG. 16 is a block diagram illustrating a configuration of an L0 and L1 prediction image generation unit.

FIG. 17 is a block diagram illustrating another configuration of the L0 and L1 prediction image generation unit.

FIG. 18 is a flowchart illustrating a relationship between weighted prediction, GBI processing, and BIO processing according to an embodiment.

FIG. 19 is a flowchart illustrating a relationship between the weighted prediction, GBI processing, and BIO processing according to another embodiment.

FIG. 20 is a flowchart illustrating a relationship between the weighted prediction and BIO processing according to another embodiment.

FIG. 21 is a block diagram illustrating a configuration of a video coding apparatus.

FIG. 22 is a schematic diagram illustrating a configuration of an inter prediction parameter coder.

Description of Embodiments

First Embodiment

Hereinafter, an embodiment of the present invention will be described with reference to the drawings.

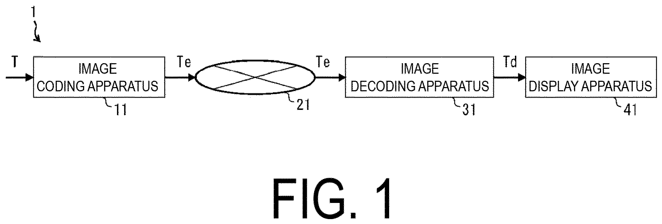

FIG. 1 is a schematic diagram illustrating a configuration of an image transmission system 1 according to the present embodiment.

The image transmission system 1 is a system in which a coding stream obtained by coding a coding target image is transmitted, the transmitted coding stream is decoded, and thus an image is displayed. The image transmission system 1 includes a video coding apparatus (image coding apparatus) 11, a network 21, a video decoding apparatus (image decoding apparatus) 31, and a video display apparatus (image display apparatus) 41.

An image T is input to the video coding apparatus 11.

The network 21 transmits a coding stream Te generated by the video coding apparatus 11 to the video decoding apparatus 31. The network 21 is the Internet, a Wide Area Network (WAN), a Local Area Network (LAN), or a combination thereof. The network 21 is not necessarily limited to a bi-directional communication network, and may be a unidirectional communication network configured to transmit broadcast waves of digital terrestrial television broadcasting, satellite broadcasting of the like. Furthermore, the network 21 may be substituted by a storage medium in which the coding stream Te is recorded, such as a Digital Versatile Disc (DVD: registered trademark) or a Blu-ray Disc (BD: registered trademark).

The video decoding apparatus 31 decodes each of the coding streams Te transmitted from the network 21 and generates one or multiple decoded images Td.

The video display apparatus 41 displays all or part of one or multiple decoded images Td generated by the video decoding apparatus 31. For example, the video display apparatus 41 includes a display device such as a liquid crystal display and an organic Electro-Luminescence (EL) display. Forms of the display include a stationary type, a mobile type, an HMD type, and the like. In addition, in a case that the video decoding apparatus 31 has a high processing capability, an image having high image quality is displayed, and in a case that the apparatus has a lower processing capability, an image which does not require high processing capability and display capability is displayed.

Operator

Operators used in the present specification will be described below.

» is a right bit shift, << is a left bit shift, & is a bitwise AND, | is a bitwise OR, |= is an OR assignment operator, and || indicates a logical sum.

x?y:z is a ternary operator to take y in a case that x is true (other than 0) and take z in a case that x is false (0).

Clip3 (a, b, c) is a function to clip c in a value equal to or greater than a and less than or equal to b, and a function to return a in a case that c is less than a (c < a), return b in a case that c is greater than b (c > b), and return c in other cases (provided that a is less than or equal to b (a <= b)).

abs (a) is a function that returns the absolute value of a.

Int (a) is a function that returns the integer value of a.

floor (a) is a function that returns the maximum integer equal to or less than a.

ceil (a) is a function that returns the minimum integer equal to or greater than a.

a/d represents division of a by d (round down decimal places).

a^b represents the b-th power of a.

sign (a) is a function that returns the sign of a. sign(a) = a > 0? 1 : a == 0? 0 : -1

log2(a) is a function of returning logarithm of a to the base 2.

Max(a, b) is a function that returns a in a case that a >= b and b in a case that a < b.

Min(a, b) is a function that returns a in a case that a <= b and b in a case that a > b.

Round(a) is a function of returning the rounded value of a. Round(a) = sign(a) * floor (abs(a) + 0.5).

Structure of Coding Stream Te

Prior to the detailed description of the video coding apparatus 11 and the video decoding apparatus 31 according to the present embodiment, a data structure of the coding stream Te generated by the video coding apparatus 11 and decoded by the video decoding apparatus 31 will be described.

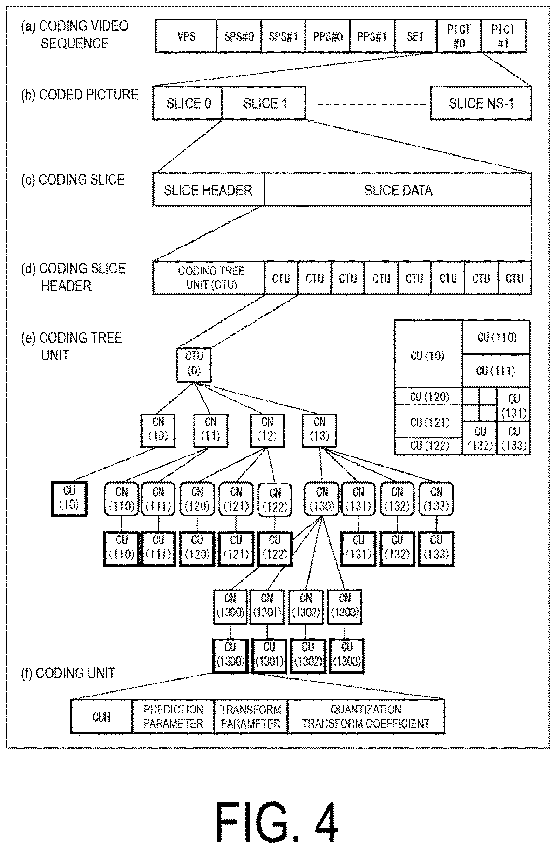

FIG. 4 is a diagram illustrating a hierarchical structure of data of the coding stream Te. The coding stream Te includes a sequence and multiple pictures constituting the sequence illustratively. (a) to (f) of FIG. 4 are diagrams illustrating a coding video sequence defining a sequence SEQ, a coded picture prescribing a picture PICT, a coding slice prescribing a slice S, a coding slice data prescribing slice data, a coding tree unit included in the coding slice data, and a coding unit included in the coding tree unit, respectively.

Coding Video Sequence

In the coding video sequence, a set of data referred to by the video decoding apparatus 31 to decode the sequence SEQ to be processed is defined. As illustrated in FIG. 4(a), the sequence SEQ includes a Video Parameter Set, a Sequence Parameter Set SPS, a Picture Parameter Set PPS, a picture PICT, and Supplemental Enhancement Information SEI.

In the video parameter set VPS, in a video including multiple layers, a set of coding parameters common to multiple videos and a set of coding parameters associated with the multiple layers and an individual layer included in the video are defined.

In the sequence parameter set SPS, a set of coding parameters referred to by the video decoding apparatus 31 to decode a target sequence is defined. For example, a width and a height of a picture are defined. Note that multiple SPSs may exist. In that case, any of the multiple SPSs is selected from the PPS.

In the picture parameter set PPS, a set of coding parameters referred to by the video decoding apparatus 31 to decode each picture in a target sequence is defined. For example, a reference value (pic_init_qp_minus26) of a quantization step size used for decoding of a picture and a flag (weighted_pred_flag) indicating an application of a weight prediction are included. Note that multiple PPSs may exist. In that case, any of the multiple PPSs is selected from each picture in a target sequence.

Coded Picture

In the coded picture, a set of data referred to by the video decoding apparatus 31 to decode the picture PICT to be processed is defined. As illustrated in FIG. 4(b), the picture PICT includes a slice 0 to a slice NS-1 (NS is the total number of slices included in the picture PICT).

Note that in a case that it is not necessary to distinguish each of the slice 0 to the slice NS-1 below, subscripts of reference signs may be omitted. In addition, the same applies to other data with subscripts included in the coding stream Te which will be described below.

Coding Slice

In the coding slice, a set of data referred to by the video decoding apparatus 31 to decode the slice S to be processed is defined. As illustrated in FIG. 4(c), the slice includes a slice header and a slice data.

The slice header includes a coding parameter group referred to by the video decoding apparatus 31 to determine a decoding method for a target slice. Slice type specification information (slice_type) indicating a slice type is one example of a coding parameter included in the slice header.

Examples of slice types that can be specified by the slice type specification information include (1) I slice using only an intra prediction in coding, (2) P slice using a unidirectional prediction or an intra prediction in coding, and (3) B slice using a unidirectional prediction, a bi-prediction, or an intra prediction in coding, and the like. Note that the inter prediction is not limited to a uni-prediction and a bi-prediction, and the prediction image may be generated by using a larger number of reference pictures. Hereinafter, in a case of being referred to as the P or B slice, a slice that includes a block in which the inter prediction can be used is indicated.

Note that the slice header may include a reference to the picture parameter set PPS (pic_parameter_set_id).

Coding Slice Data

In the coding slice data, a set of data referred to by the video decoding apparatus 31 to decode the slice data to be processed is defined. The slice data includes a CTU as illustrated in FIG. 4(d). The CTU is a block of a fixed size (for example, 64 × 64) constituting a slice, and may be called a Largest Coding Unit (LCU).

Coding Tree Unit

In FIG. 4(e), a set of data referred to by the video decoding apparatus 31 to decode the CTU to be processed is defined. The CTU is split into coding unit CUs, each of which is a basic unit of coding processing, by a recursive Quad Tree split (QT split), Binary Tree split (BT split), or Ternary Tree split (TT split). The BT split and the TT split are collectively referred to as a Multi Tree split (MT split). Nodes of a tree structure obtained by recursive quad tree splits are referred to as Coding Nodes. Intermediate nodes of a quad tree, a binary tree, and a ternary tree are coding nodes, and the CTU itself is also defined as the highest coding node.

The CT includes, as CT information, a QT split flag (qt_split_cu_flag) indicating whether or not to perform a QT split, an MT split flag (mtt_split_cu_flag) indicating the presence or absence of an MT split, an MT split direction (mtt_split_cu_vertical_flag) indicating a split direction of an MT split, and an MT split type (mtt_split_cu binary_flag) indicating a split type of the MT split. qt_split_cu_ flag, mtt_split_cu_ flag, mt_split_cu_vertical_flag, and mtt_split_cu_binary_flag are transmitted for each coding node.

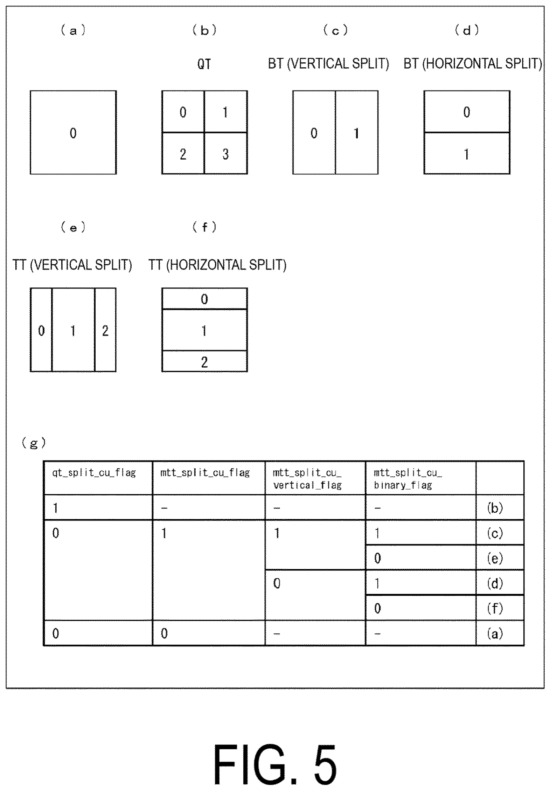

FIG. 5 is a diagram illustrating an example of splitting of a CTU. In a case that qt_split_cu_flag is 1, the coding node is split into four coding nodes (FIG. 5(b)).

In a case that qt_split_cu_flag is 0, the coding node is not split and has one CU as a node in a case that mtt_split_cu_flag is 0 (FIG. 5(a)). The CU is an end node of the coding nodes and is not split any further. The CU is a basic unit of coding processing.

In a case that mtt_split_cu_flag is 1, the coding node is subjected to the MT split as described below. In a case that the mt_split_cu_vertical_flag is 0 and the mtt_split_cu_binary_flag is 1, the coding node is horizontally split into two coding nodes (FIG. 5(d)). In a case that the mt_split_cu_vertical_flag is 1 and the mtt_split_cu_binary_flag is 1, the coding node is vertically split into two coding nodes (FIG. 5(c)). Additionally, in a case that the mtt_split_cu_vertical_flag is 0 and the mtt_split_cu_binary_flag is 0, the coding node is horizontally split into three coding nodes (FIG. 5(f)). In a case that the mtt_split_cu_vertical_flag is 1 and the mtt_split_cu_binary_flag is 0, the coding node is vertically split into three coding nodes (FIG. 5(e)). These are illustrated in FIG. 5(g).

Furthermore, in a case that a size of the CTU is $64 \times 64$ pixels, a size of the CU may take any of $64 \times 64$ pixels, $64 \times 32$ pixels, $32 \times 64$ pixels, $32 \times 32$ pixels, $64 \times 16$ pixels, $16 \times 64$ pixels, $32 \times 16$ pixels, $16 \times 32$ pixels, $16 \times 16$ pixels, $64 \times 8$ pixels, $8 \times 64$ pixels, $32 \times 8$ pixels, $8 \times 32$ pixels, $16 \times 8$ pixels, $8 \times 16$ pixels, $8 \times 8$ pixels, $64 \times 4$ pixels, $4 \times 64$ pixels, $32 \times 4$ pixels, $4 \times 32$ pixels, $16 \times 4$ pixels, $4 \times 16$ pixels, $8 \times 4$ pixels, $4 \times 8$ pixels, and $4 \times 4$ pixels.

Coding Unit

As illustrated in FIG. 4(f), a set of data referred to by the video decoding apparatus 31 to decode the coding unit to be processed is defined. Specifically, the CU is constituted of a CU header CUH, a prediction parameter, a transform parameter, a quantization transform coefficient, and the like. In the CU header, a prediction mode and the like are defined.

There are cases that the prediction processing is performed in units of CU or performed in units of sub-CU in which the CU is further split. In a case that the sizes of the CU and the sub-CU are equal to each other, the number of sub-CUs in the CU is one. In a case that the CU is larger in size than the sub-CU, the CU is split into sub-CUs. For example, in a case that the CU has a size of $8 \times 8$, and the sub-CU has a size of $4 \times 4$, the CU is split into four sub-CUs which include two horizontal splits and two vertical splits.

There are two types of predictions (prediction modes), which are intra prediction and inter prediction. The intra prediction refers to a prediction in an identical picture, and the inter prediction refers to prediction processing performed between different pictures (for example, between pictures of different display times).

Transform and quantization processing is performed in units of CU, but the quantization transform coefficient may be subjected to entropy coding in units of subblock such as $4 \times 4$.

Prediction Parameter

A prediction image is derived by a prediction parameter accompanying a block. The prediction parameter includes prediction parameters of the intra prediction and the inter prediction.

The prediction parameter of the inter prediction will be described below. The inter prediction parameter is constituted by prediction list utilization flags predFlagLO and predFlagL1, reference picture indexes refIdxL0 and refIdxL1, and motion vectors mvL0 and mvL1. The prediction list utilization flags predFlagLO and predFlagL1 are flags to indicate whether or not reference picture lists referred to as L0 list and L1 list respectively are used, and a corresponding reference picture list is used in a case that the value is 1. Note that, in a case that the present specification mentions "a flag indicating whether or not XX", a flag being other than 0 (for example, 1) assumes a case of XX, and a flag being 0 assumes a case of not XX, and 1 is treated as true and 0 is treated as false in a logical negation, a logical product, and the like (hereinafter, the same is applied). However, other values can be used for true values and false values in real apparatuses and methods.

For example, syntax elements to derive inter prediction parameters include an affine flag affine_flag, a merge flag merge_flag, a merge index merge_idx, an inter prediction indicator inter_pred_idc, a reference picture index refIdxLX, a prediction vector index mvp_LX_idx, a motion vector difference mvdLX, and an adaptive motion vector resolution mode amvr_mode.

Reference Picture List

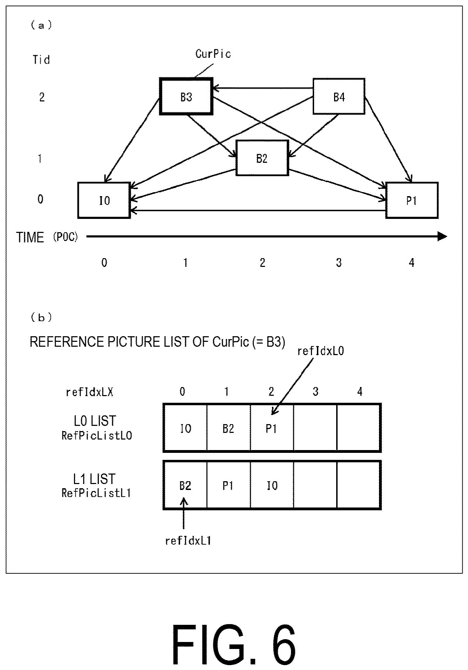

A reference picture list is a list constituted by reference pictures stored in a reference picture memory 306. FIG. 6 is a conceptual diagram illustrating an example of reference pictures and reference picture lists. In FIG. 6(a), a rectangle indicates a picture, an arrow indicates a reference relationship of a picture, a horizontal axis indicates time, each of I, P, and B in a rectangle indicates an intra-picture, a uni-prediction picture, a bi-prediction picture, and a number in a rectangle indicates a decoding order. As illustrated, the decoding order of the pictures is 10, PI, B2, B3, and B4, and the display order is 10, B3, B2, B4, and P1. FIG. 6(b) illustrates an example of reference picture lists of the picture B3 (target picture). The reference picture list is a list to represent a candidate of a reference picture, and one picture (slice) may include one or more reference picture lists. In the illustrated example, the target picture B3 includes two reference picture lists, i.e., an L0 list RefPicList0 and an L1 list RefPicList1. For an individual CU, which picture in a reference picture list RefPicListX (X = 0 or 1) is actually referred to is specified with the reference picture index refIdxLX. The diagram illustrates an example of refIdxL0 = 2, refIdxL1 = 0. Note that LX is a description method used in a case of not distinguishing an L0 prediction and an L1 prediction, and in the following description, distinguishes parameters for the L0 list and parameters for the L1 list by replacing LX with L0 and L1.

Merge Prediction and AMVP Prediction

A decoding (coding) method for prediction parameters include a merge prediction (merge) mode and an Advanced Motion Vector Prediction (AMVP) mode, and the merge flag merge_flag is a flag to identify the modes. The merge prediction mode is a mode to use to derive from prediction parameters of neighboring blocks already processed without including a prediction list utilization flag predFlagLX (or inter prediction indicator inter_pred_idc), the reference picture index refIdxLX, and a motion vector mvLX in coded data. The AMVP mode is a mode in which the inter prediction indicator inter_pred_idc, the reference picture index refIdxLX, and the motion vector mvLX are included in coded data. Note that, the motion vector mvLX is coded as the prediction vector index mvp_LX_idx identifying a prediction vector mvpLX, the motion vector difference mvdLX, and the adaptive motion vector resolution mode amvr_mode. Furthermore, in addition to the merge prediction mode, an affine prediction mode identified by an affine flag affine_flag may be provided. As one form of the merge prediction mode, a skip mode identified by the skip flag skip_flag may be provided. Note that the skip mode is a mode in which the prediction parameter is derived and used as is the case with the merge mode and in which the prediction error (residual image) is not included in the coded data. In other words, in a case that skip flag skip_flag is 1, for the target CU, the coded data includes only the syntax associated with the merge mode such as the skip flag skip_flag and the merge index merge_idx, and no motion vectors or the like. Thus, in a case that the skip flag skip flag indicates that the skip mode is applied to the target CU, decoding of the prediction parameters other than the skip flag skip_flag is omitted.

Motion Vector

The motion vector mvLX indicates a shift amount between blocks in two different pictures. A prediction vector and a motion vector difference related to the motion vector mvLX is referred to as a prediction vector mvpLX and a motion vector difference mvdLX, respectively.

Inter Prediction Indicator inter_pred_idc and Prediction List Utilization Flag predFlagLX

The inter prediction indicator inter_pred_idc is a value indicating types and the number of reference pictures, and takes any value of PRED_L0, PRED_L1, and PRED_BI. PRED_L0 and PRED_L1 indicate uni-predictions which use one reference picture managed in the L0 list and one reference picture managed in the L1 list, respectively. PRED_BI indicates a bi-prediction BiPred which uses two reference pictures managed in the L0 list and the L1 list.
The merge index merge_idx is an index to indicate which prediction parameter is used as a prediction parameter of a target block among prediction parameter candidates (merge candidates) derived from blocks of which the processing is completed.
A relationship between the inter prediction indicator inter_pred_idc and prediction list utilization flags predFlagL0 and predFlagL1 are as follows, and those can be converted mutually.
    inter_pred_idc = (predFlagL1 << 1) + predFlagL0
    predFlagL0 = inter_pred_idc & 1

predFlagL1 = inter_pred_idc >> 1
Determination of Bi-Prediction biPred

A flag biPred of whether or not to be the bi-prediction BiPred can be derived from whether or not two prediction list utilization flags are both 1. For example, the derivation can be performed by the following equation.

$$biPred = (predFlagL0 == 1\ \&\&\ predFlagL1 == 1)$$

Alternatively, the flag biPred can be also derived from whether the inter prediction indicator is a value indicating to use two prediction lists (reference pictures). For example, the derivation can be performed by the following equation.

$$biPred = (inter\_pred\_idc == PRED\_BI)\ ?\ 1\ :\ 0$$

Configuration of Video Decoding Apparatus

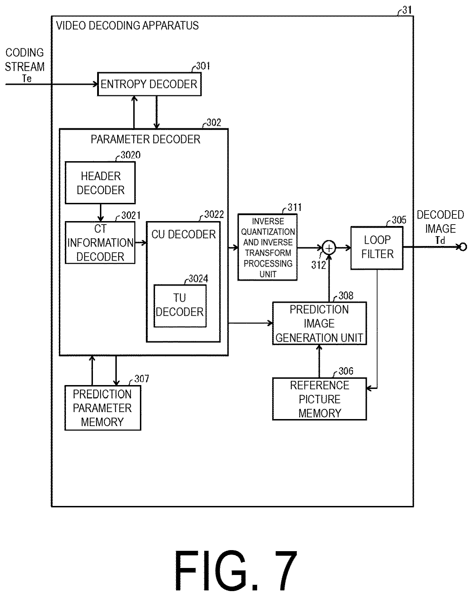

The configuration of the video decoding apparatus 31 (FIG. 7) according to the present embodiment will be described.

The video decoding apparatus 31 includes an entropy decoder 301, a parameter decoder (prediction image decoding apparatus) 302, a loop filter 305, the reference picture memory 306, a prediction parameter memory 307, a prediction image generation unit (prediction image generation apparatus) 308, an inverse quantization and inverse transform processing unit 311, and an addition unit 312. Note that a configuration in which the loop filter 305 is not included in the video decoding apparatus 31 may be used in accordance with the video coding apparatus 11 described later.

The parameter decoder 302 further includes a header decoder 3020, a CT information decoder 3021, and a CU decoder 3022 (prediction mode decoder), which are not illustrated, and the CU decoder 3022 further includes a TU decoder 3024. These may be collectively referred to as a decoding module. The header decoder 3020 decodes, from coded data, parameter set information such as the VPS, the SPS, and the PPS, and the slice header (slice information). The CT information decoder 3021 decodes a CT from coded data. The CU decoder 3022 decodes a CU from coded data. In a case that a TU includes a prediction error, the TU decoder 3024 decodes QP update information (quantization correction value) and quantization prediction error (residual_coding) from coded data.

In addition, the parameter decoder 302 includes an inter prediction parameter decoder (prediction image generation apparatus) 303 and an intra prediction parameter decoder 304 which are not illustrated. The prediction image generation unit 308 includes an inter prediction image generation unit (prediction image generation apparatus) 309 and an intra prediction image generation unit 310.

Furthermore, an example in which a CTU and a CU are used as units of processing is described below, but the processing is not limited to this example, and processing in units of sub-CU may be performed. Alternatively, by replacing the CTU and the CU by a block and replacing the sub-CU by a subblock, and processing by a block or a subblock unit may be performed.

The entropy decoder 301 performs entropy decoding on the coding stream Te input from the outside and separates and decodes individual codes (syntax elements).

The entropy decoder 301 outputs the decoded codes to the parameter decoder 302. The decoded codes include, for example, a prediction mode predMode, the merge flag merge_flag, the merge index merge_idx, the inter prediction indicator inter_pred_idc, the reference picture index refIdxLX, the prediction vector index mvp_LX_idx, the motion vector difference mvdLX, the adaptive motion vector resolution mode amvr_mode, and the like. Which code is to be decoded is controlled based on an indication of the parameter decoder 302.

Configuration of Inter Prediction Parameter Decoder

The inter prediction parameter decoder 303 decodes an inter prediction parameter with reference to a prediction parameter stored in the prediction parameter memory 307, based on a code input from the entropy decoder 301. Furthermore, the inter prediction parameter decoder 303 outputs the decoded inter prediction parameter to the prediction image generation unit 308, and stores the decoded inter prediction parameter in the prediction parameter memory 307.

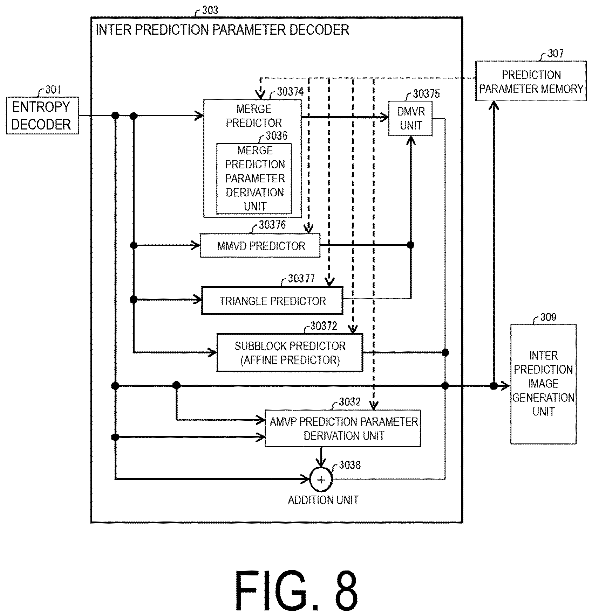

FIG. 8 is a schematic diagram illustrating a configuration of the inter prediction parameter decoder 303 according to the present embodiment. The inter prediction parameter decoder 303 includes a merge prediction unit 30374, a DMVR unit 30375, a subblock prediction unit (affine prediction unit) 30372, an MMVD prediction unit (motion vector derivation unit) 30376, a triangle prediction unit 30377, an AMVP prediction parameter derivation unit 3032, and an addition unit 3038. The merge prediction unit 30374 includes a merge prediction parameter derivation unit 3036. The AMVP prediction parameter derivation unit 3032, the merge prediction parameter derivation unit 3036, and the affine prediction unit 30372 are means shared by the video coding apparatus and the video decoding apparatus, and may thus be collectively referred to as a motion vector derivation unit (motion vector derivation apparatus).

The inter prediction parameter decoder 303 indicates to the entropy decoder 301 to decode syntax elements related to the inter prediction, and extracts syntax elements included in coded data, for example, the affine flag affine_flag, the merge flag merge_flag, the merge index merge_idx, the inter prediction indicator inter_pred_idc, the reference picture index refIdxLX, the prediction vector index mvp_LX_idx, the motion vector difference mvdLX, and the adaptive motion vector resolution mode amvr_mode.

In a case that the affine flag affine_flag indicates 1, i.e., the affine prediction mode, the affine prediction unit 30372 derives the inter prediction parameter for the subblock.

In a case that the merge flag merge_flag indicates 1, i.e., the merge prediction mode, the merge index merge_idx is decoded, and the result is output to the merge prediction parameter derivation unit 3036.

In a case that the merge flag merge_flag indicates 0, that is, the AMVP prediction mode, for example, the inter prediction indicator inter_pred_idc, the reference picture index refIdxLX, the prediction vector index mvp_Lx_idx, and the motion vector difference mvdLX are decoded as the AMVP prediction parameters. The AMVP prediction parameter derivation unit 3032 derives the prediction vector mvpLX from the prediction vector index mvp_LX_idx. The addition unit 3038 adds the prediction vector mvpLX and motion vector difference mvdLX derived to derive the motion vector mvLX.

Affine Prediction Unit

The affine prediction unit 30372 derives an affine prediction parameter of a target block. In the present embodiment, as the affine prediction parameter, motion vectors (mv0_x, mv0_y) and (mv1_x, mv1_y) of the two control points (V0, VI) of the target block are derived. Specifically, a motion vector of each control point may be derived by prediction from a motion vector of an adjacent block of the target block, or the motion vector of each control point may be derived by the sum of the prediction vector derived as the motion vector of the control point and the motion vector difference derived from the coded data.

Note that the affine prediction unit 30372 may derive parameters used for 4-parameter MVD affine prediction or parameters used for 6-parameter MVD affine prediction as appropriate.

Merge Prediction

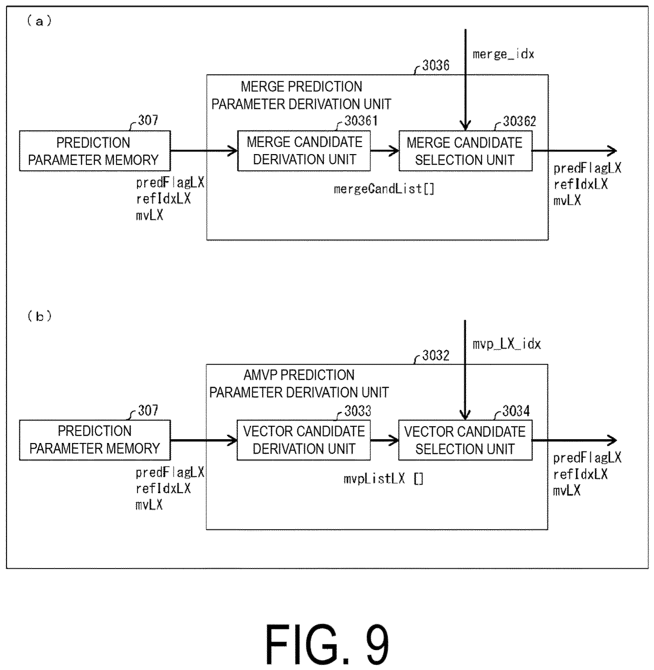

(a) of FIG. 9 is a schematic diagram illustrating a configuration of the merge prediction parameter derivation unit 3036 included in the merge prediction unit 30374. The merge prediction parameter derivation unit 3036 includes a merge candidate derivation unit 30361 and a merge candidate selection unit 30362. Note that the merge candidates include the prediction list utilization flag predFlagLX, the motion vector mvLX, and the reference picture index refIdxLX, and is stored in the merge candidate list. The merge candidate stored in the merge candidate list is assigned an index in accordance with a prescribed rule.

The merge candidate derivation unit 30361 derives the merge candidate by directly using a motion vector of a decoded adjacent block and the reference picture index refIdxLX without any change. In addition, the merge candidate derivation unit 30361 may apply spatial merge candidate derivation processing, time merge candidate derivation processing, pairwise merge candidate derivation processing, and zero merge candidate derivation processing described later.

As the spatial merge candidate derivation processing, the merge candidate derivation unit 30361 reads the prediction parameters stored in the prediction parameter memory 307 in accordance with a prescribed rule, and configures the prediction parameters as merge candidates. A method for specifying the reference picture involves, for example, prediction parameters relating to neighboring blocks that are within a prescribed range from the target block (e.g., all or some of blocks adjoining the target block on the left A1, on the right B1, at the upper right B0, at the lower left A0, and at the upper left B2 of the target block). The respective merge candidates are referred to as A1, B1, B0, A0, and B2.

Here, A1, B1, B0, A0, and B2 are each motion information derived from a block including corresponding ones of the following coordinates.

A1: (xCb - 1, yCb + cbHeight - 1)
B1: (xCb + cbWidth -1, yCb - 1)
B0: (xCb + cbWidth, yCb - 1)
A0: (xCb - 1, yCb + cbHeight)
B2: (xCb - 1, yCb - 1)

As the time merge derivation processing, the merge candidate derivation unit 30361 reads prediction parameters for the bottom right CBR of the target block or a block C in the reference picture including center coordinates, from the prediction parameter memory 307 as merge candidates Col, and stores the prediction parameters in the merge candidate list mergeCandList[].

The pairwise derivation unit derives a pairwise candidate avgK and stores the pairwise candidate avgK in the merge candidate list mergeCandList[].

The merge candidate derivation unit 30361 derives zero merge candidates Z0,..., ZM for which reference picture indexes refIdxLX are 0,..., M, and the X component and the Y component of the motion vector mvLX are both 0, and stores the zero merge candidates Z0,..., ZM in the merge candidate list.

The merge candidate derivation unit 30361 or the pairwise derivation unit stores the merge candidates in the merge candidate list mergeCandList[] in the order of, for example, space merge candidates (A1, B1, B0, A0, B2), the time merge candidate Col, the pairwise candidate AvgK, and the zero merge candidate ZeroCandK. Note that a reference block that is not available (intra prediction block, or the like) is not stored in the merge candidate list.

```
i = 0
if(availableFlagA1)
mergeCandList[i++] = A1
if(availableFlagB 1)
mergeCandList[i++] = B1
if(availableFlagB0)
mergeCandList[i++] = B0
if(availableFlagA0)
mergeCandList[i++] = A0
if(availableFlagB2)
mergeCandList[i++] = B2
if(availableFlagCol)
mergeCandList[i++] = Col
if(availableFlagAvgK)
mergeCandList[i++] = avgK
if(i < MaxNumMergeCand)
mergeCandList[i++] = ZK
```

Note that the upper left coordinates of the target block are denoted as (xCb, yCb) and that the width of the target block is denoted as cbWidth and that the height of the target block is denoted as cbHeight.

The merge candidate selection unit 30362 selects a merge candidate N indicated by a merge index merge_idx from the merge candidates included in the merge candidate list, in accordance with the equation below.

N = mergeCandList[merge_idx]

Here, N is a label indicating a merge candidate, and takes A1, B1, B0, A0, B2, Col, AvgK, ZeroCandK, and the like. The motion information of the merge candidate indicated by the label N is indicated by (mvLXN [0], mvLXN [1]), predFlagLXN, refIdxLXN.

The merge candidate selection unit 30362 selects the movement information (mvLXN[0], mvLXN[1]), pred-FlagLXN, and refIdxLXN of the selected merge candidate as inter prediction parameters for the target block. The merge candidate selection unit 30362 stores the selected inter prediction parameters in the prediction parameter memory 307 and outputs the selected inter prediction parameters to the prediction image generation unit 308.

MMVD Prediction Unit 30373

The MMVD prediction unit 30373 adds the motion vector difference mvdLX to the center vector mvdLX (motion vector of the merge candidate) derived by the merge candidate derivation unit 30361, and derives the motion vector.

The MMVD prediction unit 30376 derives the motion vector mvLX[] by using syntaxes base_candidate_idx, direction_idx, and distance_idx that are decoded from the merge candidate mergeCandList[] and coded data or that are coded into coded data. Furthermore, the MMVD prediction unit 30376 may code or decode a syntax distance_list_idx for selecting a distance table for use.

The MMVD prediction unit 30376 selects the center vector mvLN[] by using base_candidate_idx.

N = mergeCandList[base_candidate_idx]

The MMVD prediction unit 30376 derives a base distance (mvdUnit[0], mvdUnit[1]) and a distance DistFrom-BaseMV.

```
dir_table_x[] = {2, -2, 0, 0, 1, -1, -1, 1}
dir_table_y[] = {0, 0, 2, -2, 1, -1, 1, -1}
mvdUnit[0] = dir_table_x[direction_idx]
mvdUnit[1] = dir_table_y[direction_idx]
DistFromBaseMV = DistanceTable[distance_idx]
```

The MMVD prediction unit 30376 derives the motion vector difference refineMv[].

```
firstMv[0] = (DistFromBaseMV << shiftMMVD) * mvdUnit[0]
firstMv[1] = (DistFromBaseMV << shiftMMVD) * mvdUnit[1]
```

Here, shiftMMVD is a value adjusting the magnitude of the motion vector difference such that the magnitude is suitable for the accuracy MVPREC of the motion vector in the motion compensation unit 3091 (interpolation unit).

```
refineMvL0[0] = firstMv[0]
refineMvL0[1] = firstMv[1]
refineMvL1[0] = -firstMv[0]
refineMvL1[1] = -firstMv[1]
```

Finally, the MMVD prediction unit 30376 derives the motion vector of the MMVD merge candidate from the motion vector difference refineMvLX and the central vector mvLXN as follows:

```
mvL0[0] = mvL0N[0] + refineMvL0[0]
mvL0[1] = mvL0N[1] + refineMvL0[1]
mvL1[0] = mvL1N[0] + refineMvL1[0]
mvL1[1] = mvL1N[1] + refineMvL1[1]
```

AMVP Prediction

FIG. 9(b) is a schematic diagram illustrating the configuration of the AMVP prediction parameter derivation unit 3032 according to the present embodiment. The AMVP prediction parameter derivation unit 3032 includes a vector candidate derivation unit 3033 and a vector candidate selection unit 3034. The vector candidate derivation unit 3033 derives a prediction vector candidate from a motion vector mvLX of a decoded adjacent block stored in the prediction parameter memory 307 based on the reference picture index refIdxLX, and stores the result in a prediction vector candidate list mvpListLX[].

The vector candidate selection unit 3034 selects, among the prediction vector candidates of the prediction vector candidate list mvpListLX[], a motion vector mvpListLX[mvp_LX_idx] indicated by the prediction vector index mvp_LX_idx, as a prediction vector mvpLX. The vector candidate selection unit 3034 outputs the selected prediction vector mvpLX to the addition unit 3038.

The addition unit 3038 adds the prediction vector mvpLX input from the AMVP prediction parameter derivation unit 3032 and the decoded motion vector difference mvdLX, and calculates the motion vector mvLX. The addition unit 3038 outputs the calculated motion vector mvLX to the prediction image generation unit 308 and the prediction parameter memory 307.

```
mvLX[0] = mvpLX[0] + mvdLX[0]
mvLX[1] = mvpLX[1] + mvdLX[1]
```

The adaptive motion vector resolution mode amvr_mode is a syntax that switches the accuracy of the motion vector derived in the AMVP mode, and, for example, switches between 1/4, 1, and 4 pixel accuracy at the amvr_mode = 0, 1, and 2.

In a case that the accuracy of motion vectors is 1/16 accuracy, inverse quantization may be performed by using MvShift (= 1 << amvr_mode) derived from the amvr_mode as described below, in order to change the motion vector difference with a 1/4, 1, or 4 pixel accuracy to a motion vector difference with a 1/16 pixel accuracy.

mvdLX [0] = mvdLX [0] << (MvShift + 2)
mvdLX[1] = mvdLX[1] << (MvShift + 2)

Note that the parameter decoder 302 may further derive mvdLX[] by decoding the syntax below.

- abs_mvd_greater0_flag
- abs_mvd_minus2
- mvd_sign_flag are decoded. Then, the parameter decoder 302 decodes the motion vector difference lMvd[] from the syntax by using the equation below.

$$lMvd[compIdx] = abs\_mvd\_greater0\_flag[compIdx] * (abs\_mvd\_minus2[compIdx] + 2) * (1 ? 2 * mvd\_sign\_flag[compIdx]$$

Furthermore, the decoded motion vector difference lMvd [] is configured to mvdLX for a translation MVD (MotionModelIdc[x][y] == 0) and configured to mvdCpLX for a control point MVD (MotionModelIdc[x][y]! = 0).

if (MotionModelIdc[x][y] == 0)
mvdLX[x0][y0][compIdx] = lMvd[compIdx]
else
mvdCpLX[x0][y0][compIdx] = lMvd[compIdx] << 2
DMVR

Now, a DECODER UNIT side Motion Vector Refinement (DMVR) processing performed by the DMVR unit 30375 will be described. In a case that the merge flag merge_flag indicates that the merge prediction mode is applied to the target CU or that the skip flag skip_flag indicates that the skip mode is applied to the target CU, the DMVR unit 30375 uses the reference picture to modify the motion vector mvLX of the target CU derived by the merge prediction unit 30374.

Specifically, in a case that the prediction parameter derived by the merge prediction unit 30374 is bi-prediction, the motion vector is refined using the prediction image derived from the motion vector corresponding to two reference pictures. The refined motion vector mvLX is supplied to the inter prediction image generation unit 309.

Triangle Prediction

The triangle prediction will now be described. In triangle prediction, the target CU is split into two triangular prediction units by using a diagonal line or an opposite diagonal line as a boundary. The prediction image in each triangle prediction unit is derived by performing weighting mask processing on each pixel of the prediction image of the target CU (the rectangular block including the triangular prediction unit) depending on the position of the pixel. For example, a triangle image can be derived from a rectangular image by multiplication by masking in which the pixels of the triangular region included in the rectangular region are 1, whereas the pixels of the portions of the rectangular region other than the portion corresponding to the triangular region are 0. Additionally, after the inter prediction image is generated, the adaptive weighted processing is applied to both regions across the diagonal line, and one prediction image of the target CU (rectangular block) is derived by adaptive weighted processing using two prediction images. This processing is referred to as triangle combining processing. Then, transform (inverse transform) and quantization (inverse quantization) processing is applied to the entire target CU. Note that the triangle prediction is applied only in a case of the merge prediction mode or the skip mode.

The triangle predictor 30377 derives the prediction parameters corresponding to the two triangular regions used for the triangle prediction, and supplies the predicted prediction parameters to the inter prediction image generation unit 309. The triangle prediction may be configured not to use bi-prediction for simplification of processing. In this case, an inter prediction parameter for a uni-prediction is derived in one triangular region. Note that the motion compensation unit 3091 and the triangle combining unit 30952 derive two prediction images and perform composition by using the prediction images.

The loop filter 305 is a filter provided in the coding loop, and is a filter that removes block distortion and ringing distortion and improves image quality. The loop filter 305 applies a filter such as a deblocking filter, a Sample Adaptive Offset (SAO), and an Adaptive Loop Filter (ALF) on a decoded image of a CU generated by the addition unit 312.

The reference picture memory 306 stores a decoded image of the CU generated by the addition unit 312 in a prescribed position for each target picture and target CU.

The prediction parameter memory 307 stores a prediction parameter in a position prescribed for each CTU or CU to be decoded. Specifically, the prediction parameter memory 307 stores a parameter decoded by the parameter decoder 302, the prediction mode predMode decoded by the entropy decoder 301, and the like.

To the prediction image generation unit 308, the prediction mode predMode, the prediction parameter, and the like are input. In addition, the prediction image generation unit 308 reads a reference picture from the reference picture memory 306. The prediction image generation unit 308 generates a prediction image of a block or a subblock by using the prediction parameter and the read reference picture (reference picture block) in the prediction mode indicated by the prediction mode predMode. Here, the reference picture block refers to a set of pixels (referred to as a block because they are normally rectangular) on a reference picture and is a region that is referred to for generating a prediction image.

Inter Prediction Image Generation Unit 309

In a case that the prediction mode predMode indicates an inter prediction mode, the inter prediction image generation unit 309 generates a prediction image of a block or a subblock using an inter prediction by using the inter prediction parameter input from the inter prediction parameter decoder 303 and the read reference picture.

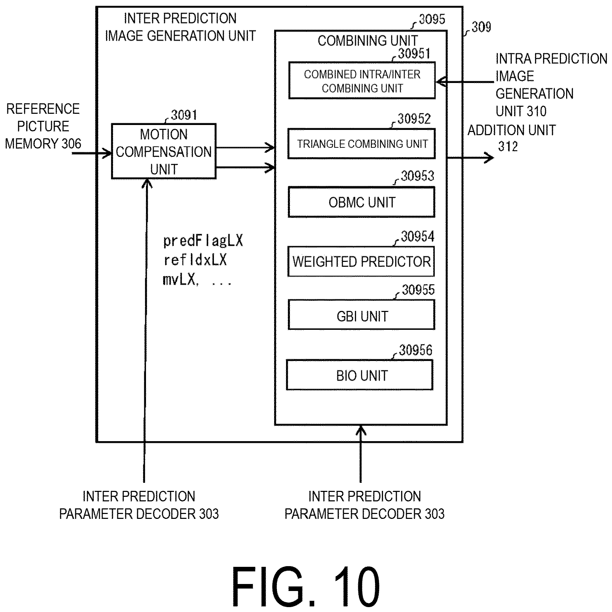

FIG. 10 is a schematic diagram illustrating the configuration of the inter prediction image generation unit 309 included in the prediction image generation unit 308 according to the present embodiment. The inter prediction image generation unit 309 includes a motion compensation unit (prediction image generation apparatus) 3091 and a combining unit 3095.

Motion Compensation

The motion compensation unit 3091 (interpolation image generation unit 3091) generates an interpolation image (motion compensation image), based on the inter prediction parameters (prediction list utilization flag predFlagLX, reference picture index refIdxLX, motion vector mvLX) input from the inter prediction parameter decoder 303, by reading, from the reference picture memory 306, a block at a position shifted by the motion vector mvLX while taking the position of the target block in a reference picture RefPicLX specified by the reference picture index refIdxLX as the starting point. Here, in a case that the accuracy of the motion vector mvLX is not an integer accuracy, by applying a filter for generating a pixel of a fractional position referred to as a motion compensation filter, the motion compensation image is generated.

The motion compensation unit 3091 first derives an integer position (xInt, yInt) and a phase (xFrac, yFrac) corresponding to in-prediction block coordinates (x, y) by the following equation.

$$xInt = xPb + (mvLX[0] >> (log2(MVPREC))) + x$$

$$xFrac = mvLX[0] \& (MVPREC - 1)$$

$$yInt = yPb + (mvLX[1] >> (log2(MVPREC))) + y$$

$$yFrac = mvLX[1] \& (MVPREC - 1)$$

Here, (xPb, yPb) indicates the upper left coordinates of a block with a bW * bH size, that is, x = 0... bW - 1, y = 0... bH - 1, and MVPREC indicates the accuracy of the motion vector mvLX (1/MVPREC pixel accuracy). For example, MVPREC = 16.

The motion compensation unit 3091 derives a temporary image temp[][] by performing horizontal interpolation processing on a reference picture refImg using an interpolation filter. In the following equation, $\Sigma$ is the sum related to k of k = 0,..., NTAP - 1, shift1 is a normalization parameter for adjusting a value range, and offset1 = 1 << (shift1 - 1).

13

$$temp[x][y] = (\Sigma mcFilter[xFrac][k] * refImg[xInt + k - NTAP/2 + 1][yInt] + offset1) >> shift1$$

Subsequently, the motion compensation unit 3091 derives an interpolation image Pred[][] by performing vertical interpolation processing on the temporary image temp[][]. In the following equation, $\Sigma$ is the sum related to k of k = 0,..., NTAP - 1, shift2 is a normalization parameter for adjusting a value range, and offset2 = 1 << (shift2 - 1).

$$Pred[x][y] = (\Sigma mcFilter[xFrac][k] * temp[x][y + k - NTAP/2 + 1] + offset2) >> shift2$$

The interpolation image generation processing described above may be represented by Interpolation(refImg, xPb, yPb, bW, bH, mvLX).

Combining Unit

The combining unit 3095 references an interpolation image supplied by the motion compensation unit 3091, an inter prediction parameter supplied by the inter prediction parameter decoder 303, and an intra image supplied by the intra prediction image generation unit 310, to generate a prediction image, and supplies the generated prediction image to the addition unit 312.
The combining unit 3095 includes a Combined intra/inter combining unit 30951, a triangle combining unit 30952, an OBMC unit 30953, a weighted predictor 30954, a GBI unit 30955, and a BIO unit 30956.

Combined Intra/Inter Combining Processing

The Combined intra/inter combining unit 30951 generates a prediction image by compositionally using a uni-directional prediction image, a prediction image based on the skip mode or merge mode, and an intra prediction image in AMVP.

Triangle Combining Processing

The triangle combining unit 30952 generates a prediction image using the triangle prediction described above.

OBMC Processing

The OBMC unit 30953 generates a prediction image by using Overlapped block motion compensation (OBMC) processing. The OBMC processing includes the following processing.

- An interpolation image (motion compensation image) of a target subblock is generated by using an interpolation image (PU interpolation image) generated by using an inter prediction parameter added to the target subblock, and an interpolation image (OBMC interpolation image) generated by using a motion parameter of an adjacent subblock of the target subblock.
- A prediction image is generated by weighted-averaging the OBMC interpolation image and the PU interpolation image.

Weighted Predictor 30954

The weighted predictor 309454 multiplies motion compensation images PredLO and PredL1 by a weight coefficient to generate a prediction image for the block. In a case that one of prediction list utilization flags (predFlagLO or predFlagL1) is 1 (uni-prediction) and no weighted prediction is used, processing in accordance with the following equation is executed in which a motion compensation image PredLX (LX is L0 or L1) is adapted to the number of pixel bits bitDepth.

$$Pred[x][y] = Clip3(0, (1 << bitDepth) - 1, (PredLX[x][y] + offset1) >> shift1)$$

Here, shift1 = Max(2, 14 - bitDepth), offset1 = 1 << (shift1 - 1) are established.

Bi-directional Prediction Processing

Furthermore, in a case that both of prediction list utilization flags (predFlagLO and predFlagL1) are 1 (bi-prediction BiPred) and no weighted prediction is used, processing in accordance with the following equation is performed in which the motion compensation images PredLO and PredL1 are averaged and adapted to the number of pixel bits.

$$\text{Pred}[x][y] = \text{Clip3}(0, (1 << \text{bitDepth}) - 1, (\text{PredL0}[x][y] + \text{PredL1}[x][y] + \text{offset2}) >> \text{shift2})$$

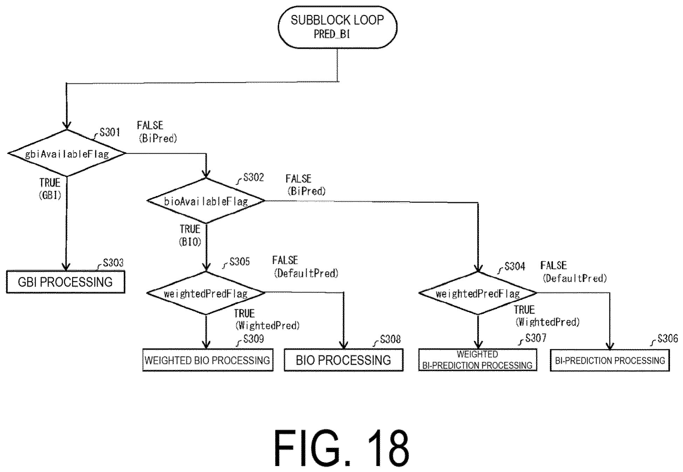

Here, shift2 = Max(3, 15 - bitDepth) and offset2 = 1 << (shift2 - 1) are established. Furthermore, the bi-prediction processing in FIG. 18, FIG. 19, and FIG. 20 described below refers to the above-described processing. This processing is also referred to as normal bi-prediction.

Furthermore, in a case that the uni-prediction and the weighted prediction are performed, for L0 prediction, the weighted predictor 30954 derives a weighted prediction coefficient w0 and an offset o0 from coded data, and performs processing in accordance with the following equation.

$$\text{Pred}[x][y] = \text{Clip3}(0, (1 << \text{bitDepth}) - 1, ((\text{PredL0}[x][y] * w0 + (1 << (\log2WD - 1))) >> \log2WD) + o0)$$

For L1 prediction, the weighted predictor 30954 derives a weighted prediction coefficient w1 and an offset o1 from coded data, and performs processing in accordance with the following equation.

$$\text{Pred}[x][y] = \text{Clip3}(0, (1 << \text{bitDepth}) - 1, ((\text{PredL1}[x][y] * w1 + (1 << (\log2WD - 1))) >> \log2WD) + o1)$$

Here, log2WD is a variable obtained by explicitly adding together the values of Log2WeightDenom + shift1 that are sent in the slice header separately for luminance and for chrominance.

Weighted Bi-directional Prediction Processing

Furthermore, in a case that the bi-prediction BiPred and the weighted prediction are performed, the weighted predictor 30954 derives weighted prediction coefficients w0, w1, o0, and o1 from coded data, and performs processing in accordance with the equation below.

$$\text{Pred}[x][y] = \text{Clip3}(0, (1 << \text{bitDepth}) - 1, (\text{PredL0}[x][y] * w0 + \text{PredL1}[x][y] * w1 + ((o0 + o1 + 1) << \log2WD)) >> (\log2WD + 1))$$

Hereinafter, in the present embodiment, GBI processing, BIO processing, and weighted BIO processing are used as processing for bi-prediction that generates a prediction image by using two or more interpolation images, as well as normal bi-prediction processing and weighted bi-prediction processing. These types of processing will be described sequentially.

GBI Processing

For "weighted prediction" described above, an example has been described in which an interpolation image is multiplied by a weight coefficient to generate a prediction image. Here, another example will be described in which an interpolation image is multiplied by a weight coefficient to generate a prediction image. In particular, processing for generating a prediction image using Generalized bi-prediction (hereinafter referred to as GBI prediction) will be described. In the GBI prediction, the L0 prediction image PredLO and L1 prediction image PredL1 in the bi-prediction are multiplied by the weight coefficients (w0, w1) to generate a prediction image Pred.

In a case that the GBI prediction is used to generate the prediction image, the GBI unit 30955 switches the weight coefficients (w0, w1) in coding units. In other words, the GBI unit 30954 of the inter prediction image generation unit 309 configures a weight coefficient for each coding unit. In the GBI prediction, multiple weight coefficient candidates are defined in advance, and gbiIdx is an index indicating a weight coefficient used in the target block and included in multiple weight coefficient candidates included in the table.

The GBI unit 30955 checks the flag gbiAppliedFlag indicating whether the GBI prediction is to be used, and in a case of FALSE, the motion compensation unit 3091 generates a prediction image using the following equation.

$$\text{Pred}[x][y] = \text{Clip3}(0, (1 << \text{bitDepth})?1,$$
$$(\text{PredL0}[x][y] + \text{PredL1}[x][y] + \text{offset2}) >> \text{shift2})$$

Here, the initial state of gbiAppliedFlag is FALSE. The GBI unit 30955 configures gbiAppliedFlag to TRUE in a case that an SPS flag indicating that the GBI processing is enabled is on and that bi-prediction is performed. Furthermore, for an additional (AND) condition, gbiAppliedFlag may also be configured to TRUE in a case that gbiIdx indicating an index into a table for GBI prediction weight coefficients is not 0. Here, 0 indicates that the L0 prediction image and the L1 prediction image have an equal weight. Furthermore, for an additional (AND) condition, gbiAppliedFlag may also be configured to TRUE in a case that the CU has a block size of a certain value or greater.

In a case that gbiAppliedFlag indicates TRUE, the GBI unit 30955 derives the prediction image Pred from weights w0 and w1, and PredLO and PredL1 in accordance with the equation below.

$$\text{Pred}[x][y] = \text{Clip3}(0, (1 << \text{bitDepth})?1,$$
$$(\text{w0} * \text{PredL0}[x][y] + \text{w1} * \text{PredL1}[x][y] + \text{offset3}) >> (\text{shift2} + 3))$$

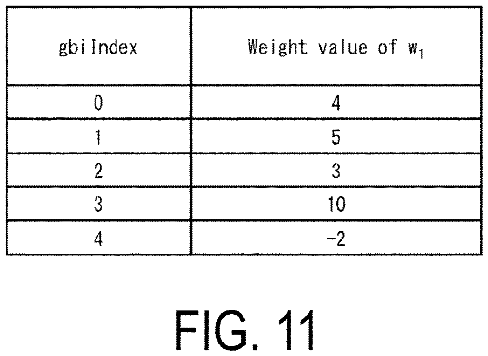

Here, the weight coefficient w1 is a coefficient derived from a table gbwTable [] as illustrated in FIG. 11, by gbiIdx explicitly indicated in syntax. gbwTable[] = {4, 5, 3, 10, -2}. The weight coefficient w0 is defined as (8 - w1). Note that in a case that gbiIdx = 0, then w0 = w1 = 4, and these values are equivalent to values in normal bi-prediction.

shift1, shift2, offset1, and offset2 are derived in accordance with the equation below.

$$\text{shift1} = \text{Max}(2, 14 - \text{bitDepth})$$
$$\text{shift2} = \text{Max}(3, 15 - \text{bitDepth}) = \text{shift1} + 1$$
$$\text{offset1} = 1 << (\text{shift1} - 1)$$
$$\text{offset2} = 1 << (\text{shift2} - 1)$$
$$\text{offset3} = 1 << (\text{shift2} + 2)$$

In the case that there may be multiple tables gbwTable[] having different combinations of weight coefficients, the GBI unit 30955 may switch the table used to select the weight coefficient, depending on whether the picture structure is LowDelay (LB) or not.

In a case that the GBI prediction is used in the AMVP prediction mode, the inter prediction parameter decoder 303 decodes gbiIdx and transmits a decoding result to the GBI unit 30955. Additionally, in a case that the GBI prediction is used in the merge prediction mode, the inter prediction parameter decoder 303 decodes the merge index merge_idx, and the merge candidate derivation unit 30361 derives gbiIdx of each merge candidate. Specifically, the merge candidate derivation unit 30361 uses the weight coefficient for the adjacent block used to derive the merge candidate, as the weight coefficient for the merge candidate used for the target block. That is, in the merge mode, the previously used weight coefficient is inherited as the weight coefficient for the target block.

Selection of Prediction Mode Using GBI Prediction

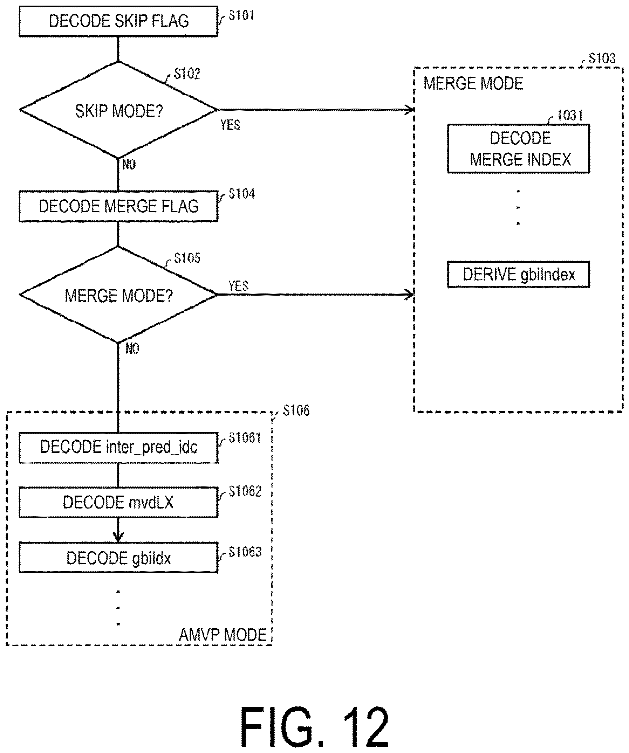

Now, processing for selecting the prediction mode using the GBI prediction in the video decoding apparatus 31 will be described with reference to FIG. 12. FIG. 12 is a flowchart illustrating an example of a flow of selection processing for the prediction mode in the video decoding apparatus 31.

As illustrated in FIG. 12, the inter prediction parameter decoder 303 first decodes the skip flag (SI01). In a case that the skip flag indicates that the skip mode is active (YES in S102), then the prediction mode is the merge mode (S103). The inter prediction parameter decoder 303 decodes the merge index (S1031), and in a case that the GBI prediction is used, the GBI unit 30955 derives the weight coefficient derived by using the merge candidate, as the weight coefficient for the GBI prediction.

In a case that the skip flag does not indicate that the skip mode is active (NO in S102), the inter prediction parameter decoder 303 decodes the merge flag (S104). In a case that the merge flag indicates that the merge mode is active (YES in S105), the prediction mode is the merge mode (S103), the inter prediction parameter decoder 303 decodes the merge index (S1031). In a case that the GBI prediction is used, the GBI unit 30955 derives the weight coefficient derived by using the merge candidate, as the weight coefficient for the GBI prediction.

In a case that the merge flag does not indicate that the merge mode is active (NO in S105), the prediction mode is the AMVP mode (S106).

In the AMVP mode, the inter prediction parameter decoder 303 decodes an inter prediction indicator inter_pred_idc (S1061). Subsequently, the inter prediction parameter decoder 303 decodes the motion vector difference mvdLX (S1062). Subsequently, the inter prediction parameter decoder 303 decodes gbiIdx (S1063), and in a case that the GBI prediction is used, the GBI unit 30955 selects the weight coefficient w1 for the GBI prediction from the weight coefficient candidates in the table in FIG. 11.

BIO Processing

The BIO unit 30956 generates a prediction image by performing Bi-directional optical flow (BIO) sample prediction process in which a prediction image is derived from a motion compensation refinement value derived from a gradient image and two interpolation images.

Details of the prediction (BIO prediction) using the BIO processing performed by the BIO unit 30956 will be described. In a bi-prediction mode, the BIO unit 30956 generates a prediction image with reference to the two prediction images (first prediction image and second prediction image) and a gradient correction term.

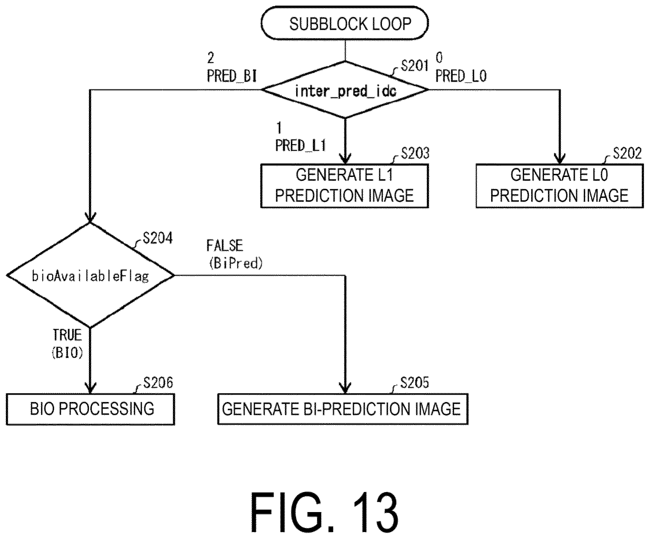

FIG. 13 is a flowchart illustrating a flow of processing for deriving a prediction image.

In a case that the inter prediction parameter decoder 303 determines L0 uni-directional prediction (in S201, inter_pred_idc is 0), the motion compensation unit 3091 generates an L0 prediction image PredL0[x][y] (S202). In a case that the inter prediction parameter decoder 303 determines L1 uni-directional prediction (in S201, inter_pred_idc is 1), the motion compensation unit 3091 generates an L1 prediction image PredL1[x][y] (S203). On the other hand, in a case that the inter prediction parameter decoder 303 determines that the bi-prediction mode is active (in S201, inter_pred_idc is 2), the processing continues to S204 described below. In S204, the combining unit 3095 references bioAvailableFlag indicating whether to perform the BIO processing, and determines whether the BIO processing is necessary. In a case that the bioAvailableFlag indicates TRUE, the BIO unit 30956 performs the BIO processing to generate a bi-prediction image (S206). In a case that the bioAvailableFlag indicates FALSE, the combining unit 3095 generates a prediction image by normal prediction processing (S205).

The inter prediction parameter decoder 303 may derive TRUE for bioAvailableFlag in a case that the L0 reference picture refImgL0 and the L1 reference picture refImgL1 are different reference pictures and that the two reference pictures are in opposite directions with respect to the target picture. Specifically, assuming that the target image is currPic, bioAvailableFlag indicates TRUE in a case that DiffPicOrderCnt (currPic, refImgL0) * DiffPicOrderCnt (currPic, refImgL1) < 0 is satisfied. Here, DiffPicOrderCnt() is a function that derives the difference between Picture Order Counts (POCs: picture display orders) of the two images as follows.

DiffPicOrderCnt(picA, picB) = PicOrderCnt(picA) - PicOrderCnt(picB)

As a condition under which bioAvailableFlag indicates TRUE, the condition that the motion vector of the target block is not a motion vector in units of subblocks may be added.

Additionally, as a condition under which bioAvailableFlag indicates TRUE, the condition that the sum of absolute difference between the L0 interpolation image and the L1 interpolation image is greater than or equal to a prescribed value may be added.

Additionally, as a condition under which bioAvailableFlag indicates TRUE, the condition that a prediction image creation mode is a prediction image creation mode in units of blocks may be added.

The determination for "adding the condition" as described above can be made based on a logical AND condition.

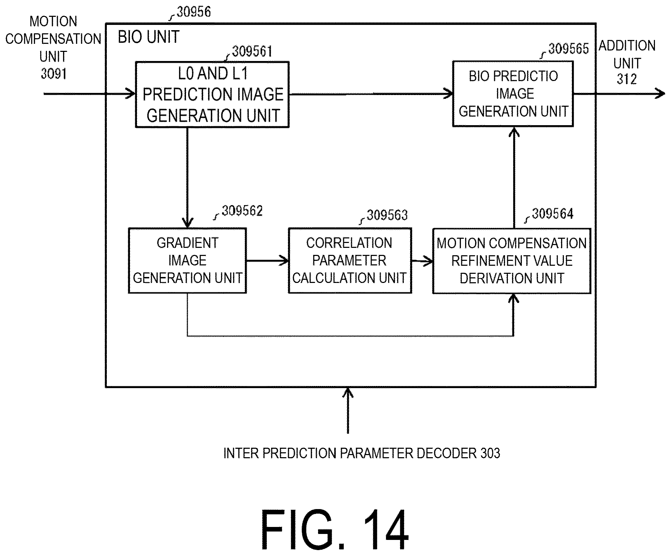

The specific contents of processing performed by the BIO unit 30956 will be described using FIG. 14. The BIO processing unit 30956 includes an L0 and L1 prediction image generation unit 309561, a gradient image generation unit 309562, a correlation parameter calculation unit 309563, a motion compensation refinement value derivation unit 309564, and a BIO prediction image generation unit 309565. The BIO unit 30956 generates a prediction image from an interpolation image received from the motion compensation unit 3091 and an inter prediction parameter received from the inter prediction parameter decoder 303, and outputs the generated prediction image to the addition unit 312. Note that processing for deriving a motion compensation refinement value modBIO (motion compensation refinement value) from a gradient image and refining and deriving the prediction images PredLO and PredL1 is referred to as bi-directional optical flow sample prediction process.

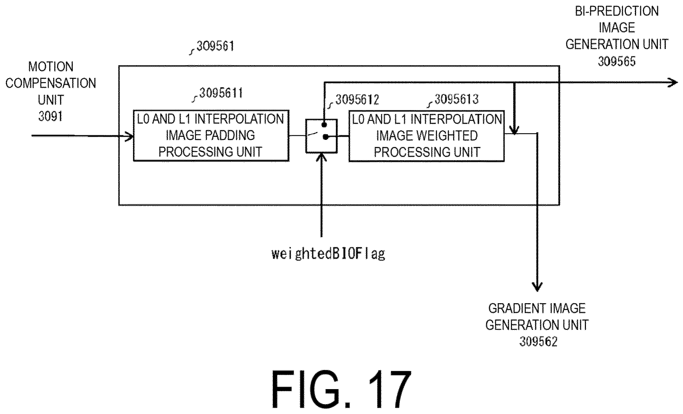

The L0 and L1 prediction image generation unit 309561 includes an L0 and L1 interpolation image padding processing unit 3095611. As illustrated in FIG. 17, the L0 and L1 prediction image generation unit 309561 may further include a switch 3095612 and an L0 and L1 interpolation image weighted processing unit 3095613.

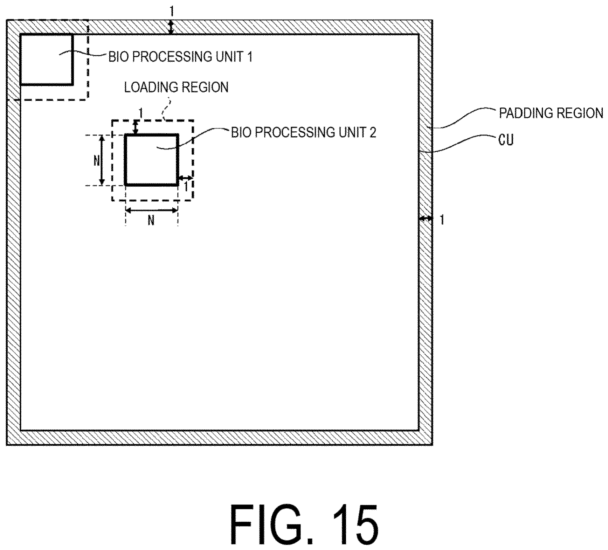

First, the L0 and L1 prediction image generation unit 309561 (L0 and L1 interpolation image padding processing unit 3095611) generates L0 and L1 prediction images (PredLO and PredL1) used for the BIO processing. In the BIO unit 30956, the BIO processing is performed based on L0 and L1 prediction images in the units of CUs or sub-CUs illustrated in FIG. 15. In the BIO processing, providing a gradient image derives an interpolation image corresponding to two pixels around a target CU or sub-CU, in other words, derives, for a CU or sub-CU block with a width (width) and a height (height), an interpolation image with a width (width + 2) and a height (height + 2). The interpolation image of this portion may be generated using a filter with a short tap length as used in a Bilinear filter rather than a regular interpolation filter. Specifically, the L0 and L1 prediction image generation unit 309561 derives an interpolation image for the inside of the target block by using an interpolation image from the motion compensation unit 3091, and derives an interpolation image for a portion outside the target block by using a Bilinear filter or the like. Note that, in cases other than a case that the gradient is derived (PredLO and PredL1 used in the gradient product sum), for the portion outside the target block, the surrounding pixels may be copied as a padding region as is the case with the outside of the picture. In other words, the correlation parameter calculation unit 309563 may use copying to derive portions outside the target block for PredL0[][] and PredL1[][] used in a case that gradient product sums s1, s2, s3, s5, and s6 are derived.

Note that the unit of the BIO processing corresponds to N × N pixels equal to or smaller than the unit of CU or sub-CU but that the gradient image generation processing and the correlation parameter derivation processing are performed by using (N + 2) × (N + 2) pixels including one pixel around.

The gradient image generation unit 309562 generates a gradient image. In an Optical Flow, it is assumed that the pixel value of each point does not change, whereas only the position of the point changes. This may be expressed by the equation below by using a change in horizontal pixel value I (horizontal gradient value Ix), a change Vx in the position of the pixel, and a change in vertical pixel value I (vertical gradient value ly), a change Vy in the position of the pixel, and a temporal change It in pixel value I.

$$Ix * Vx + ly * Vy + It = 0$$

Hereinafter, a change in position (Vx, Vy) is referred to as the corrected weight vector (u, v).

Specifically, the gradient image generation unit 309562 derives gradient images Ix0, ly0, 1x1, ly1 in accordance with the equation below. 1x0 and Ix1 indicate gradients along the horizontal direction and ly0 and ly1 indicate gradients along the vertical direction.

    lx0[x][y] = (PredL0[x + 1][y] - PredLO [x - 1][y]) >> 4
    ly0[x][y] = (PredL0[x][y + 1] - PredL0[x][y - 1]) >> 4
    lx1[x][y] = (PredL1[x + 1][y] - PredL1[x - 1][y]) >> 4
    ly1[x][y] = (PredL1[x][y + 1] - PredL1[x][y - 1]) >> 4

Then, the correlation parameter calculation unit 309563 derives gradient product sums s1, s2, s3, s5, and s6 for (N + 2) × (N + 2) pixels by using one pixel around each block of N × N pixels per inside of CU.

    s1 = sum(phiX[x][y] * phiX[x][y])
    s2 = sum(phiX[x][y] * phiY[x][y])
    s3 = sum(-theta[x][y] * phiX[x][y])
    s5 = sum(phiY[x][y] * phiY[x][y])
    s6 = sum(-theta[x][y] * phiY[x][y])

Here, sum(a) represents the sum of a for coordinates (x, y) within a block of (N + 2) × (N + 2) pixels. Additionally,

    phiX[x][y] = (lx1[x][y] + lx0[x][y]) >>3
    phiY[x][y] = (ly1[x][y] + ly0[x][y]) >> 3
    theta[x][y] = -(PredL1[x][y] >> 6) + (PredL0[x][y] >> 6)

Then, the motion compensation refinement value derivation unit 30954 uses the derived gradient product sums s1, s2, s3, s5, and s6 to derive a corrected weight vector (u, v) in units of N × N pixels.

u = (s3 « 3) » log2(s1)
v = ((s6 « 3) - ((((u * s2m) << 12) + u * s2s) >> 1)) » log2(s5)

Here, s2 m = s2 » 12 and s2s = s2 & ((1 << 12) - 1).
Note that the ranges of u and v may further be limited by using clip as described below.
u = s1 > 0? Clip3(-th, th, -(s3 << 3) >> floor (log2(s1))): 0
v = s5 > 0? Clip3(-th, th, ((s6 << 3) - ((((u * s2m) << 12) + u* s2s)) >> 1) >> floor (log2(s5))): 0

Here, th = 1 << (13 - bitDepth).
The motion compensation refinement value derivation unit 309564 uses the corrected weight vector (u, v) in units of N × N pixels and the gradient images Ix0, Iy0, Ix1, and Iy1 to derive modBIO[x][y] of the motion compensation refinement value for the N × N pixels.
modBIO[x][y] = ((Ix1[x][y] - Ix0[x][y]) * u + (Iy1[x][y] - Iy0[x] [y]) * v + 1) >> 1 (Equation A3).
Or modBIO may be derived by the equation below using a round function.
modBIO[x][y] = Round(((Ix1[x][y] - Ix0[x][y]) * u) >> 1) + Round(((Iy1[x][y] - Iy0[x][y]) * v) >> 1)
The BIO prediction image generation unit 309565 derives the pixel value Pred of the prediction image of N × N pixels in accordance with the equation below using the above-described parameters.
Pred[x][y] = Clip3(0, (1 << bitDepth) - 1, (PredL0[x][y] + PredL1[x][y] + modBIO[x][y] + offset2) >> shift2)
Here, shift2 = Max(3, 15 - bitDepth) and offset2 = 1 << (shift2 - 1) are established.
Now, another embodiment of the prediction (BIO prediction) using the BIO processing performed by the BIO unit 30956 will be described. The embodiment described above poses a problem in that the correct operation is performed in a case that the pixel bit-depth bitDepth is 10 bits but otherwise the calculation accuracy for the gradient image is not suitable for the coding pixel bit-depth, and this leads to reduced coding efficiency. Thus, as described below, the operation works in conjunction with the pixel bit-depth and is within the range of 32 bit operation in a case that the pixel bit depth bitDepth is 8 bits or more.
Specifically, the gradient image generation unit 309562 derives the gradient images Ix0, Iy0, Ix1, and Iy1 as follows.
Ix0[x][y] = (PredL0[x + 1][y] - PredL0[x - 1][y]) >> shift1
Iy0[x][y] = (PredL0[x][y + 1] - PredL0[x][y - 1]) >> shift1
Ix1[x][y] = (PredL1[x + 1][y] - PredL1[x - 1][y]) >> shift1
Iy1[x][y] = (PredL1[x][y + 1] - PredL1[x][y - 1]) >> shift 1

Here, shift1 = Max (2,14 - bitDepth).
In a case that an interpolation filter as used for HEVC is used, then the calculation accuracy for the values of PredLO and PredL1 is 14 bits in a case that bitDepth ranges from 8 to 12 bits, and (bitDepth+ 2) bits in a case that bitDepth is greater than 12. In the present embodiment, the calculation accuracy for the gradient images Ix0, Iy0, Ix1, and Iy1 is set to (bitDepth + 1) bits by right shifting by shift1 depending on a value of bitDepth.
Then, the correlation parameter calculation unit 309563 derives the gradient product sums s1, s2, s3, s5, and s6 for each block of N × N pixels within the CU. In this regard, one pixel around the block is further used to calculate s1, s2, s3, s5, and s6 from sums for the pixels in a block of (N + 2) * (N + 2) pixels.
s1 = sum(phiX[x][y] * phiX[x][y])
s2 = sum(phiX[x][y] * phiY[x][y])
s3 = sum(-theta[x][y] * phiX[x][y])
s5 = sum(phiY[x][y] * phiY[x][y])
s6 = sum(-theta[x][y] * phiY[x][y])

Here, sum(a) represents the sum of a for coordinates (x, y) within a block of (N + 2) × (N + 2) pixels. Additionally,

theta[x][y] = -(PredL1 [x][y] >> shift4) + (PredLO [x] [y] >> shift4)
phiX[x][y] = (Ix1[x][y] + Ix0[x][y]) >> shift5

phiY[x][y] = (ly1[x][y] + ly0[x][y]) >> shift5

Here,

shift4 = Min(8, bitDepth - 4)
shift5 = Min(5, bitDepth - 7)

In another configuration of the correlation parameter calculation unit 309563, the gradient product sums s1, s2, s3, s5, and s6 may be determined based on a block of N $\times$ N pixels instead of a block of (N + 2) $\times$ (N + 2) pixels. In this case, the following shift values are used.
shift4 = Min(7, bitDepth - 5)
shift5 = Min(4, bitDepth - 8)

In addition, the unit of the BIO processing is identical to a loading region, and this eliminates a need for the padding region for one pixel around the target CU or sub-CU unlike in FIG. 14.
Then, the motion compensation refinement value derivation unit 309564 uses the derived gradient product sums s1, s2, s3, s5, and s6 to derive a corrected weight vector (u, v) in units of N $\times$ N pixels.
u = (s3 « 3) » log2(s1)
v = ((s6 « 3) - ((((u * s2m) << 12) + u * s2s) >> 1)) » log2(s5)

Here, s2 m = s2 >> 12 and s2s = s2 & ((1 << 12) - 1).
Note that the ranges of u and v may further be limited by using clip as described below.
u = s1 > 0? Clip3(-th, th, -(s3 << 3) >> floor (log2(s1))): 0
v = s5 > 0? Clip3 (-th, th, ((s6 << 3) - ((((u*s2m) << 12) + u * s2s) >> 1)) >> floor (log2(s5))): 0

Here, th = Max (2, 1 <<(13 - bitDepth)).
The value of th needs to be calculated in conjunction with shift1, and thus a case needs to be considered in which the pixel bit-depth bitDepth is greater than 12 bits.
Note that, in a case that the sum of absolute difference between the L0 interpolation image and the L1 interpolation image is equal to or less than a prescribed value, u and v may be forcibly set to 0.
The motion compensation refinement value derivation unit 309564 uses the corrected weight vector (u, v) in units of N $\times$ N pixels and the gradient images lx0, ly0, lx1, and ly1 to derive modBIO[][] of the N $\times$ N fraction motion compensation refinement value.

$$modBIO[x][y] = ((lx1[x][y] - lx0[x][y]) * u + (ly1[x][y] - ly0[x][y]) * v) >> 1$$

The BIO prediction image generation unit 309565 derives the pixel value Pred of the prediction image in units of N $\times$ N pixels in accordance with the equation below using the above-described parameters.

$$Pred[x][y] = Clip3(0, (1 << bitDepth) - 1, (PredL0[x][y] + PredL1[x][y] +$$
$$modBIO[x][y] + offset2) >> shift2)$$

Here, shift2 = Max(3, 15 - bitDepth) and offset2 = 1 << (shift2 - 1) are established.

Weighted BIO Processing

The weighted prediction described above is used to deal with a fade image or the like in which the pixel values vary significantly temporally. An embodiment for the BIO processing in a case that weighted prediction is used will be described.

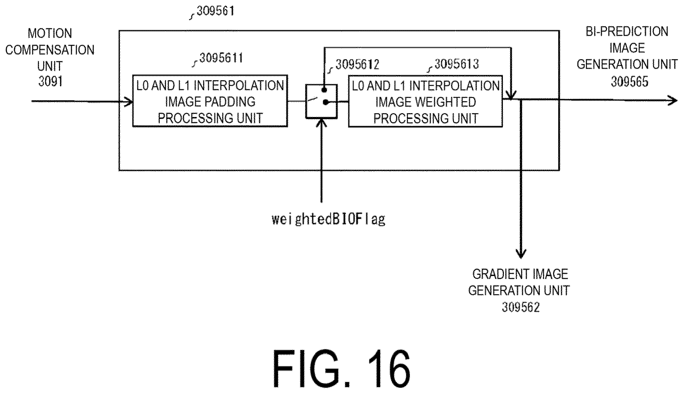

As illustrated in FIG. 16, the L0 and L1 prediction image generation unit 309561 configured to perform weighted BIO processing includes an L0 and L1 interpolation image padding processing unit 3095611, a switch 3095612, and an L0 and L1 interpolation image weighted processing unit 3095613.

Based on weightedBIOFlag corresponding to an internal flag indicating whether the BIO unit 30956 performs the weighted prediction processing, the switch 3095612 causes the L0 and L1 interpolation image weighted processing unit 3095613 to perform the weighted processing on the L0 interpolation image and the L1 interpolation image in a case that weightedBIOFlag is TRUE. Specifically, a weighted processing result weightedPredLO for the L0 interpolation image is derived as follows.

$$\text{weightedPredL0}[x][y] = \text{Clip3}(0, (1 << (14 + \text{Max}(0, \text{Bitdepth} - 12)) - 1, ((\text{PredL0}[x][y]$$
$$* w0 + (1 << (\text{Log2WeightDenom} - 1))) >> \text{Log2WeightDenom}) + (o0 << \text{shift1}))$$

The weighted processing result weightedPredL1 for the L1 interpolation image is derived as follows.

$$\text{weightedPredL1}[x][y] = \text{Clip3}(0, (1 << (14 + \text{Max}(0, \text{Bitdepth} - 12)) - 1, ((\text{PredL1}[x][y]$$
$$* w1 + (1 << (\text{Log2WeightDenom} - 1))) >> \text{Log2WeightDenom}) + (o1 << \text{shift1}))$$

Here, shift 1 = Max(2, 14 - bitDepth), and Log2WeightDenom is a value obtained from weighted prediction parameter values that are sent in the slice header separately for luminance and for chrominance.

In a case that weightedBIOFlag is FALSE, an interpolation image or an image padded with the interpolation image is used as followings:

```
weightedPredL0[x][y] = PredL0[x][y]
weightedPredL1[x][y] = PredL1[x][y],
```

In a case that this is applied to the above-described BIO processing unit, the above-described processing can be directly used without any change by replacing portions with PredLO and PredL1 with weightedPredLO and weightedPredL1. The gradient image generation unit 309562 derives the gradient images lx0, ly0, lx1, and ly1 as follows.

```
lx0[x][y] = (weightedPredL0[x + 1][y] - weightedPredLO [x - 1][y]) >> shift 1
ly0[x][y] = (weightedPredL0[x][y + 1] - weightedPredL0[x][y - 1]) >> shift 1
lx1[x][y] = (weightedPredL1[x + 1][y] - weightedPredL1[x - 1][y]) >> shift 1
ly1[x][y] = (weightedPredL1[x][y + 1] - weightedPredL1[x][y - 1]) >> shift 1
```

The correlation parameter calculation unit 309563 assumes below.

$$\text{theta}[x][y] = -(\text{weightedPredL1}[x][y] >> \text{shift4}) + (\text{weightedPredL0}[x][y] >> \text{shift4})$$

Additionally, the BIO prediction image generation unit 309565 derives the pixel value Pred of the prediction image in units of N × N pixels in accordance with the equation below by using the parameters described above.

$$\text{Pred}[x][y] = \text{Clip3}(0, (1 << \text{bitDepth}) - 1, (\text{weightedPredL0}[x][y] +$$
$$\text{weightedPredL1}[x][y] + \text{modBIO}[x][y] + \text{offset2}) >> \text{shift2})$$

By performing weighted processing on the L0 interpolation image and the L1 interpolation image as described above, the final BIO processing leads to a prediction value corresponding to the value of the weighted prediction to which the motion compensation refinement value modBIO[x][y] is added.

Note that in normal weighted bi-prediction, a prediction image with the accuracy of the pixel bit-depth BitDepth is generated directly from the two interpolation images. To derive a motion compensation refinement value derived from the gradient image, the weighted BIO processing of the present embodiment is performed as follows. Weighted processing with the accuracy of the interpolation image is performed separately on L0 and L1 to generate an L0 prediction image weightedPredLO and an L1 prediction image weightedPredL1, and weightedPredLO and weightedPredL1 are averaged. This results in correction of the pixel values of the L0 interpolation image and the L1 interpolation image pixel values in accordance with the weighted prediction. Consequently, in response to a temporal variation in pixel value, the BIO processing operates as expected even in a case that the weighted prediction is used. In other words, by combining the weighted prediction and the BIO processing for operation, the effect of improving coding efficiency is produced.

In another example of configuration, as illustrated in FIG. 17, weighted interpolation images weightedPredLO and weighttedPredL1 following derivation of a gradient image and preceding determination of the motion compensation refinement value modBIO[x][y] are processed separately from the interpolation images PredLO and PredL1 from which the final prediction image is obtained. In this case, the BIO prediction image generation unit 309565 determines the prediction value by using the equation below.

$$\text{Pred[x][y]} = \text{Clip3}(0, (1 << \text{bitDepth}) - 1, (\text{PredL0[x][y]} * w0 + \text{PredL1[x][y]} * w1 + ((o0 + o1 + 1) << \text{log2WD}) + (\text{modBIO[x][y]} << \text{Log2WeightDenom})) >> (\text{log2WD} + 1))$$

Here, it is assumed that Log2WD = Log2WeightDenom + shift1.

Note that a shift operation of modBIO[x][y] << Log2WeightDenom may be performed in a case that modBIO[x][y] is derived. In this case, the motion compensation refinement value derivation unit 309564 derives modBIO[][] by using the equation bellow.

$$\text{modBIO[x][y]} = ((\text{lx1[x][y]} - \text{lx0[x][y]}) * u + (\text{ly1[x][y]} - \text{ly0[x][y]}) * v + 1) << (\text{Log2WeightDenom} - 1)$$

In a case that weightedBIOFlag is FALSE, the L0 interpolation image and L1 interpolation image subjected to the padding processing are output.

weightedBIOFlag is set to TRUE in a case that one of the L0 interpolation image and the L1 interpolation image are used by the weighted prediction.

Alternatively, weightedBIOFlag may be set to TRUE in a case that a comparison between the sum of absolute difference of the L0 and L1 interpolation images and the sum of absolute difference of the L0 and L1 interpolation images following the weighted processing is applied and the latter one is smaller than the former one.

Additionally, weightedBIOFlag may be set to FALSE in a case that the weight coefficients of the weighted prediction include a negative coefficient.

Relationship between Weighted Prediction, GBI Processing, and BIO Processing

An example of the embodiment of the weighted prediction, the GBI processing, and the BIO processing during bi-prediction in the subblock group described above will be described.

weightedPredFlag, gbiAvaiableFlag, and bioAvailableFlag are internal variables representing the respective states of the weighted prediction processing, the GBI processing, and the BIO processing. The flag indicating TRUE enables operation of the corresponding processing, whereas the flag indicating FALSE disables operation of the corresponding processing.

FIG. 18 illustrates an embodiment in which the GBI processing, the BIO processing, and the weighted prediction processing are combined (embodiment in which the weighted BIO processing is performed). First, gbiAvailableFlag indicating the state of the GBI processing is determined (S301), and in a case that gbiAvailableFlag indicates FALSE, bioAvaiableFlag indicating the state of the BIO processing is determined (S302). In a case that gbiAvailableFlag indicates TRUE, that is, in a case that gbiIdx is not 0, GBI processing is performed based on gbwTable[] (S303). Then, in a case that bioAvaiableFlag indicates FALSE, the BIO processing is not performed and weightedPredFlag indicating the state of the weighted prediction is determined (S304). In a case that bioAvaiableFlag indicates TRUE, to perform the BIO processing is determined, and weightedPredFlag indicating the state of the weighted prediction is determined (S305). In a case that bioAvaiableFlag indicates FALSE and weightedPredFlag indicates FALSE, normal bi-prediction processing is performed (S306), and in a case that weightedPredFlag indicates TRUE, the weighted bi-prediction processing is performed (S307). In a case that bioAvaiableFlag indicates TRUE and weightedPredFlag indicates FALSE, normal BIO processing is performed (S308). In a case that weightedPredFlag indicates TRUE, weightedBIOFlag is configured to TRUE to perform the weighted BIO processing (S309). The weighted BIO processing derives the motion compensation refinement value by weighting on the interpolation images.

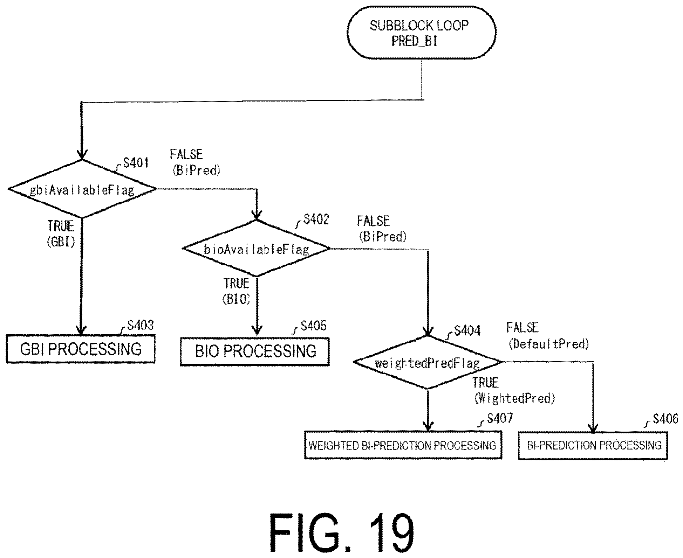

FIG. 19 is another embodiment in which the GBI processing, the BIO processing, and the weighted prediction processing are combined (embodiment in which the weighted prediction processing is not performed during the GBI processing and the BIO processing).

First, gbiAvailableFlag indicating the state of the GBI processing is determined (S401), and in a case that gbiAvailableFlag indicates FALSE, bioAvaiableFlag indicating the state of the BIO processing is determined (S402). The gbiAvailableFlag indicating FALSE means that gbiIdx is 0 or the weighting factor is for normal bi-prediction. In a case that gbiAvaiableFlag indicates TRUE, the GBI processing is performed based on gbwTable[] in a case that gbiIdx is greater than 0 (S403). Then, in a case that bioAvaiableFlag indicates FALSE, the BIO processing is not performed and weightedPredFlag indicating the state of the weighted prediction is determined (S404). In a case that bioAvaiableFlag indicates TRUE, to perform the BIO processing is determined, and the normal BIO is processed (S405). In a case that weightedPredFlag indicates FALSE, the normal bi-prediction processing is performed (S406), and in a case that weightedPredFlag indicates TRUE, the weighted bi-prediction processing is performed (S407).

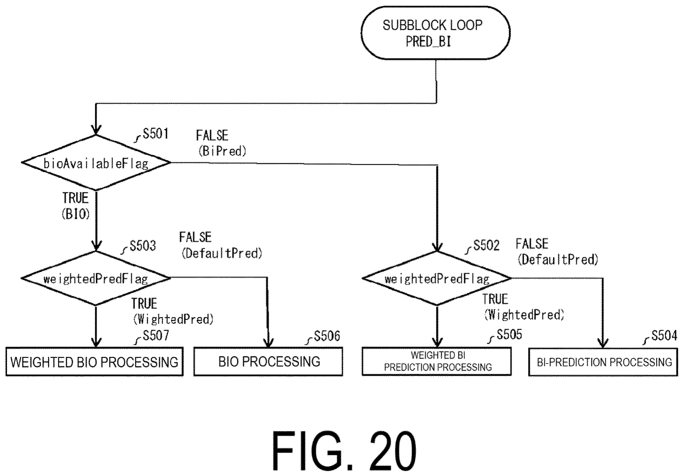

FIG. 20 is an embodiment in which the BIO processing and the weighted prediction processing are combined (embodiment of a case not including the GBI processing). First, bioAvaiableFlag indicating the state of the BIO processing, is determined (S501), and in a case that bioAvaiableFlag indicates FALSE, the BIO processing is not performed and weightedPredFlag indicating the state of the weighted prediction is determined (S502). In a case that bioAvailableFlag is TRUE, to perform the BIO processing is determined and then weightedPredFlag indicating the state of the weighted prediction is determined (S503). In a case that the BIO processing is not performed and weightedPredFlag indicates FALSE, the normal bi-prediction processing is performed (S504). In a case that weightedPredFlag indicates TRUE, the weighted bi-prediction processing is performed (S505). In a case that the BIO processing is performed and weightedPredFlag indicates FALSE, the normal BIO is processed (S506). In a case that weightedPredFlag indicates TRUE, the weighted BIO processing is performed (S507). The weighted BIO processing derives the motion compensation refinement value by weighting on the interpolation images.

Output of Combining Unit

For an output of the combining unit 3095, the generated prediction image of the block is output to the addition unit 312.

The inverse quantization and inverse transform processing unit 311 performs inverse quantization on a quantization transform coefficient input from the entropy decoder 301 to calculate a transform coefficient. This quantization transform coefficient is a coefficient obtained by performing, in coding processing, a frequency transform such as a Discrete Cosine Transform (DCT) or a Discrete Sine Transform (DST) on prediction errors for quantization. The inverse quantization and inverse transform processing unit 311 performs an inverse frequency transform such as an inverse DCT or an inverse DST on the calculated transform coefficient to calculate a prediction error. The inverse quantization and inverse transform processing unit 311 outputs the calculated prediction error to the addition unit 312.

The addition unit 312 adds the prediction image of the block input from the prediction image generation unit 308 and the prediction error input from the inverse quantization and inverse transform processing unit 311 to each other for each pixel, and generates a decoded image of the block. The addition unit 312 stores the decoded image of the block in the reference picture memory 306, and also outputs it to the loop filter 305.

Configuration of Video Coding Apparatus

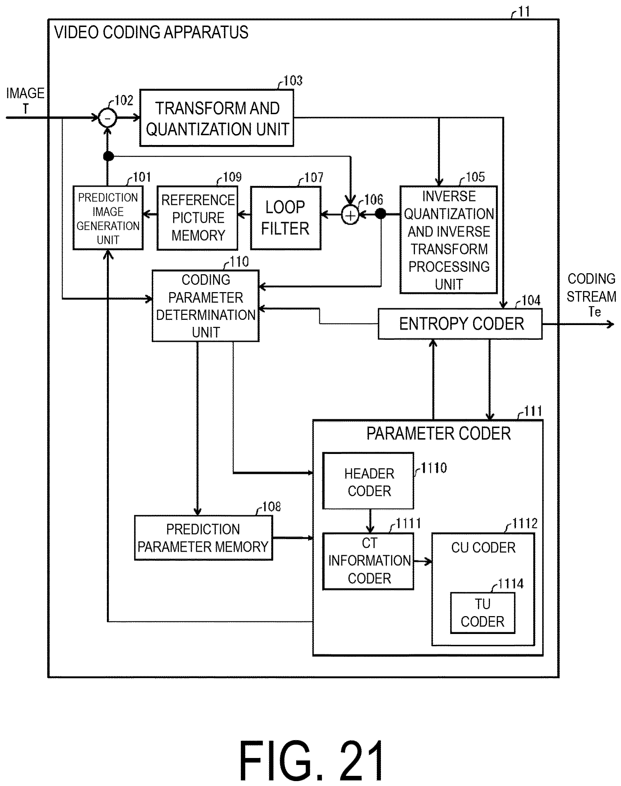

Next, a configuration of the video coding apparatus 11 according to the present embodiment will be described. FIG. 21 is a block diagram illustrating a configuration of the video coding apparatus 11 according to the present embodiment. The video coding apparatus 11 includes a prediction image generation unit 101, a subtraction unit 102, a transform and quantization unit 103, an inverse quantization and inverse transform processing unit 105, an addition unit 106, a loop filter 107, a prediction parameter memory (a prediction parameter storage unit, a frame memory) 108, a reference picture memory (a reference image storage unit, a frame memory) 109, a coding parameter determination unit 110, a parameter coder 111, and an entropy coder 104.

The prediction image generation unit 101 generates a prediction image for each CU that is a region obtained by splitting each picture of an image T. The operation of the prediction image generation unit 101 is the same as that of the prediction image generation unit 308 already described, and description thereof will be omitted.

The subtraction unit 102 subtracts a pixel value of the prediction image of a block input from the prediction image generation unit 101 from a pixel value of the image T to generate a prediction error. The subtraction unit 102 outputs the prediction error to the transform and quantization unit 103.

The transform and quantization unit 103 performs a frequency transform on the prediction error input from the subtraction unit 102 to calculate a transform coefficient, and derives a quantization transform coefficient by quantization. The transform and quantization unit 103 outputs the quantization transform coefficient to the entropy coder 104 and the inverse quantization and inverse transform processing unit 105.

The inverse quantization and inverse transform processing unit 105 is the same as the inverse quantization and inverse transform processing unit 311 (FIG. 7) in the video decoding apparatus 31, and descriptions thereof are omitted. The calculated prediction error is output to the addition unit 106.

To the entropy coder 104, the quantization transform coefficient is input from the transform and quantization unit 103, and coding parameters are input from the parameter coder 111. For example, coding parameters include codes such as a reference picture index refIdxLX, a prediction vector index mvp_LX_idx, a motion vector difference mvdLX, an adaptive motion vector resolution mode amvr_mode, a prediction mode predMode, and a merge index merge_idx.

The entropy coder 104 performs entropy coding on split information, the prediction parameters, the quantization transform coefficient, and the like to generate and output a coding stream Te.

The parameter coder 111 includes a header coder 1110, a CT information coder 1111, a CU coder 1112 (prediction mode coder), and an inter prediction parameter coder 112 and an intra prediction parameter coder 113, which are not illustrated. The CU coder 1112 further includes a TU coder 1114.

General operation of each module will be described below. The parameter coder 111 performs coding processing on parameters such as header information, split information, prediction information, quantization transform coefficients, and the like.

The CT information coder 1111 codes QT, MT (BT, TT) split information, and the like from the coded data.

The CU coder 1112 codes CU information, prediction information, a TU split flag split_transform_flag, CU residual flags cbf_cb, cbf_cr, cbf_luma, and the like.

In a case that a TU includes a prediction error, the TU coder 1114 codes QP update information (quantization correction value) and quantization prediction error (residual_coding).

The CT information coder 1111 and the CU coder 1112 feed the entropy coder 104 with syntax elements such as inter prediction parameters (prediction mode predMode, merge flag merge_flag, merge index merge_idx, inter prediction indicator inter_pred_idc, reference picture index refIdxLX, prediction vector index mvp_Lx_idx, and motion vector difference mvdLX), intra prediction parameters, and quantization transform coefficients.

Configuration of Inter Prediction Parameter Coder

The parameter coder 112 derives inter prediction parameters, based on the prediction parameters input from the coding parameter determination unit 110. The parameter coder 112 includes a configuration partly identical to a configuration in which the inter prediction parameter decoder 303 derives inter prediction parameters.

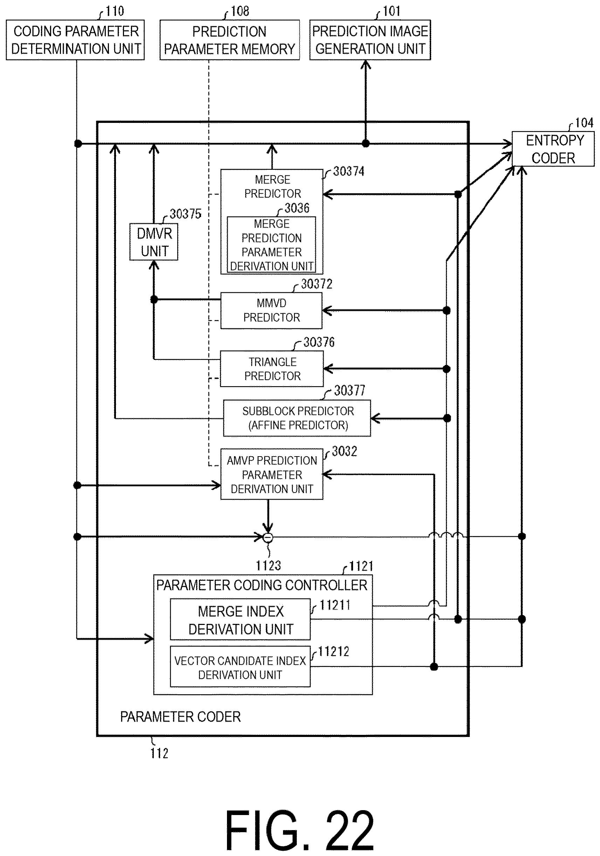

A configuration of the prediction parameter coder 112 will be described. As illustrated in FIG. 22, the parameter coder 112 includes a parameter coding controller 1121, the merge predictor 30374, the subblock predictor (affine predictor) 30372, the DMVR unit 30375, the MMVD predictor 30376, the triangle predictor 30377, the AMVP prediction parameter derivation unit 3032, and a subtraction unit 1123. The merge predictor 30374 includes the merge prediction parameter derivation unit 3036. The parameter coding controller 1121 includes a merge index derivation unit 11211 and a vector candidate index derivation unit 11212. The parameter coding controller 1121 derives merge_idx, affine_flag, base_candidate_idx, distance_idx, direction_idx, etc. in the merge index derivation unit 11211, and derives mvpLX and the like from the vector candidate index derivation unit 11212. The merge prediction parameter derivation unit 3036, the AMVP prediction parameter derivation unit 3032, the affine predictor 30372, the MMVD predictor 30376, and the triangle predictor 30377 may be collectively referred to as a motion vector derivation unit (motion vector derivation apparatus). The parameter coder 112 outputs, to the prediction image generation unit 101, the motion vectors (mvLX, subMvLX), the reference picture index refIdxLX, the inter prediction indicator inter_pred_idc, or information indicating these. Furthermore, the parameter coder 112 outputs, to the entropy coder 104, merge_flag, skip_flag, merge_idx, inter_pred_idc, refIdxLX, mvp_lX_idx, mvdLX, amvr_mode, and affine_flag.

The merge index derivation unit 11211 derives the merge index merge_idx, and outputs it to the merge prediction parameter derivation unit 3036 (merge predictor). The vector candidate index derivation unit 11212 derives the prediction vector index mvp_lX_idx.

The merge prediction parameter derivation unit 3036 derives the inter prediction parameter based on the merge index merge_idx.

The AMVP prediction parameter derivation unit 3032 derives the prediction vector mvpLX based on the motion vector mvLX. The AMVP prediction parameter derivation unit 3032 outputs the prediction vector mvpLX to the subtraction unit 1123. Note that the reference picture index refIdxLX and the prediction vector index mvp_lX_idx are output to the entropy coder 104.

The affine predictor 30372 derives an inter prediction parameter (affine prediction parameter) of a subblock.

The subtraction unit 1123 subtracts the prediction vector mvpLX, which is the output of the AMVP prediction parameter derivation unit 3032, from the motion vector mvLX input from the coding parameter determination unit 110, and generates the motion vector difference mvdLX. The motion vector difference mvdLX is output to the entropy coder 104.

The addition unit 106 adds a pixel value of the prediction image of the block input from the prediction image generation unit 101 and the prediction error input from the inverse quantization and inverse transform processing unit 105 to each other for each pixel, and generates a decoded image. The addition unit 106 stores the generated decoded image in the reference picture memory 109.

The loop filter 107 applies a deblocking filter, an SAO, and an ALF to the decoded image generated by the addition unit 106. Note that the loop filter 107 need not necessarily include the above-described three types of filters, and may have a configuration of only the deblocking filter, for example.

The prediction parameter memory 108 stores the prediction parameters generated by the coding parameter determination unit 110 for each target picture and CU at a prescribed position.

The reference picture memory 109 stores the decoded image generated by the loop filter 107 for each target picture and CU at a prescribed position.

The coding parameter determination unit 110 selects one set among multiple sets of coding parameters. The coding parameters include QT, BT, or TT split information described above, a prediction parameter, or a parameter to be coded which is generated related thereto. The prediction image generation unit 101 generates the prediction image by using these coding parameters.

The coding parameter determination unit 110 calculates, for each of the multiple sets, an RD cost value indicating the magnitude of an amount of information and a coding error. The coding parameter determination unit 110 selects a set of coding parameters of which cost value calculated is a minimum value. With this configuration, the entropy coder 104 outputs the selected set of coding parameters as the coding stream Te. The coding parameter determination unit 110 stores the determined coding parameters in the prediction parameter memory 108.

Note that, some of the video coding apparatus 11 and the video decoding apparatus 31 in the above-described embodiment, for example, the entropy decoder 301, the parameter decoder 302, the loop filter 305, the prediction image generation unit 308, the inverse quantization and inverse transform processing unit 311, the addition unit 312, the prediction image generation unit 101, the subtraction unit 102, the transform and quantization unit 103, the entropy coder 104, the inverse quantization and inverse transform processing unit 105, the loop filter 107, the coding parameter determination unit 110, and the parameter coder 111, may be realized by a computer. In that case, this configuration may be realized by recording a program for realizing such control functions on a computer-readable recording medium and causing a computer system to read the program recorded on the recording medium for execution. Note that the "computer system" mentioned here refers to a computer system built into either the video coding apparatus 11 or the video decoding apparatus 31 and is assumed to include an OS and hardware components such as a peripheral apparatus. Furthermore, a "computer-readable recording medium" refers to a portable medium such as a flexible disk, a magneto-optical disk, a ROM, a CD-ROM, and the like, and a storage device such as a hard disk built into the computer system. Moreover, the "computer-readable recording medium" may include a medium that dynamically retains a program for a short period of time, such as a communication line in a case that the program is transmitted over a network such as the Internet or over a communication line such as a telephone line, and may also include a medium that retains the program for a fixed period of time, such as a volatile memory included in the computer system functioning as a server or a client in such a case. Furthermore, the above-described program may be one for realizing some of the above-described functions, and also may be one capable of realizing the above-described functions in combination with a program already recorded in a computer system.

Furthermore, a part or all of the video coding apparatus 11 and the video decoding apparatus 31 in the embodiment described above may be realized as an integrated circuit such as a Large Scale Integration (LSI). Each function block of the video coding apparatus 11 and the video decoding apparatus 31 may be individually realized as processors, or part or all may be integrated into processors. The circuit integration technique is not limited to LSI, and the integrated circuits for the functional blocks may be realized as dedicated circuits or a multi-purpose processor. In a case that with advances in semiconductor technology, a circuit integration technology with which an LSI is replaced appears, an integrated circuit based on the technology may be used.

The embodiment of the present invention has been described in detail above referring to the drawings, but the specific configuration is not limited to the above embodiment and various amendments can be made to a design that fall within the scope that does not depart from the gist of the present invention.

Application Examples

The above-mentioned video coding apparatus 11 and the video decoding apparatus 31 can be utilized being installed to various apparatuses performing transmission, reception, recording, and regeneration of videos. Note that, the video may be a natural video imaged by camera or the like, or may be an artificial video (including CG and GUI) generated by computer or the like.

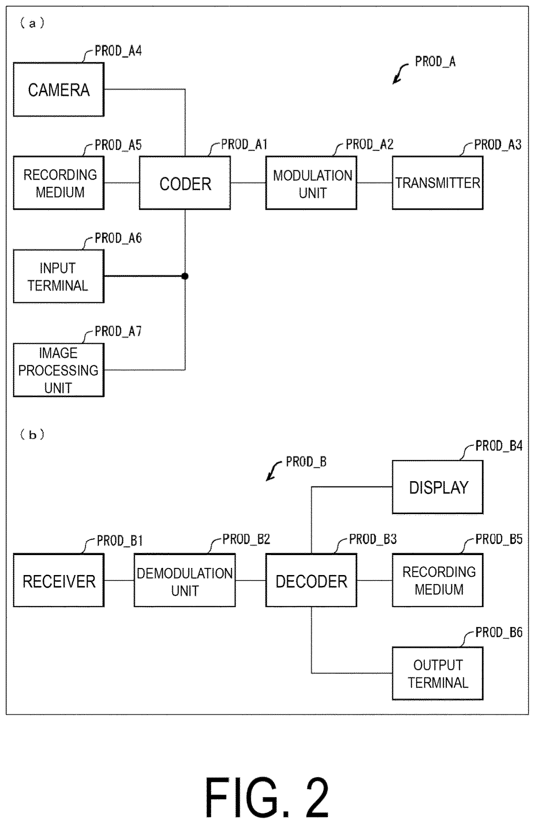

At first, referring to FIG. 2, it will be described that the above-mentioned video coding apparatus 11 and the video decoding apparatus 31 can be utilized for transmission and reception of videos.

FIG. 2(a) is a block diagram illustrating a configuration of a transmitting apparatus PROD A installed with the video coding apparatus 11. As illustrated in the diagram, the transmitting apparatus PROD A includes a coder PROD_A1 which obtains coded data by coding videos, a modulation unit PROD_A2 which obtains modulation signals by modulating carrier waves with the coded data obtained by the coder PROD_A1, and a transmitter PROD_A3 which transmits the modulation signals obtained by the modulation unit PROD_A2. The above-mentioned video coding apparatus 11 is utilized as the coder PROD_A1.

The transmitting apparatus PROD_A may further include a camera PROD_A4 that images videos, a recording medium PROD_A5 that records videos, an input terminal PROD_A6 for inputting videos from the outside, and an image processing unit A7 which generates or processes images, as supply sources of videos to be input into the coder PROD_A1. Although an example configuration in which the transmitting apparatus PROD A includes all of the constituents is illustrated in the diagram, some of the constituents may be omitted.

Note that the recording medium PROD_A5 may record videos which are not coded or may record videos coded in a coding scheme for recording different from a coding scheme for transmission. In the latter case, a decoder (not illustrated) to decode coded data read from the recording medium PROD_A5 according to the coding scheme for recording may be present between the recording medium PROD_A5 and the coder PROD_A1.

FIG. 2(b) is a block diagram illustrating a configuration of a receiving apparatus PROD_B installed with the video decoding apparatus 31. As illustrated in the diagram, the receiving apparatus PROD B includes a receiver PROD_B1 that receives modulation signals, a demodulation unit PROD_B2 that obtains coded data by demodulating the modulation signals received by the receiver PROD_B1, and a decoder PROD_B3 that obtains videos by decoding the coded data obtained by the demodulation unit PROD_B2. The above-mentioned video decoding apparatus 31 is utilized as the decoder PROD_B3.

The receiving apparatus PROD B may further include a display PROD_B4 that displays videos, a recording medium PROD_B5 for recording the videos, and an output terminal PROD_B6 for outputting the videos to the outside, as supply destinations of the videos to be output by the decoder PROD_B3. Although an example configuration that the receiving apparatus PROD_B includes all of the constituents is illustrated in the diagram, some of the constituents may be omitted.

Note that the recording medium PROD_B5 may record videos which are not coded, or may record videos which are coded in a coding scheme for recording different from a coding scheme for transmission. In the latter case, a coder (not illustrated) that codes videos acquired from the decoder PROD_B3 according to the coding scheme for recording may be present between the decoder PROD_B3 and the recording medium PROD_B5.

Note that a transmission medium for transmitting the modulation signals may be a wireless medium or may be a wired medium. In addition, a transmission mode in which the modulation signals are transmitted may be a broadcast (here, which indicates a transmission mode in which a transmission destination is not specified in advance) or may be a communication (here, which indicates a transmission mode in which a transmission destination is specified in advance). That is, the transmission of the modulation signals may be realized by any of a wireless broadcast, a wired broadcast, a wireless communication, and a wired communication.

For example, a broadcasting station (e.g., broadcasting equipment)/receiving station (e.g., television receiver) for digital terrestrial broadcasting is an example of the transmitting apparatus PROD_A/receiving apparatus PROD B for transmitting and/or receiving the modulation signals in the wireless broadcast. In addition, a broadcasting station (e.g., broadcasting equipment)/receiving station (e.g., television receivers) for cable television broadcasting is an example of the transmitting apparatus PROD _A/receiving apparatus PROD B for transmitting and/or receiving the modulation signals in the wired broadcast.

In addition, a server (e.g., workstation)/client (e.g., television receiver, personal computer, smartphone) for Video On Demand (VOD) services, video hosting services and the like using the Internet is an example of the transmitting apparatus PROD _A/receiving apparatus PROD B for transmitting and/or receiving the modulation signals in communication (usually, any of a wireless medium or a wired medium is used as a transmission medium in LAN, and the wired medium is used as a transmission medium in WAN). Here, personal computers include a desktop PC, a laptop PC, and a tablet PC. In addition, smartphones also include a multifunctional mobile telephone terminal.

A client of a video hosting service has a function of coding a video imaged with a camera and uploading the video to a server, in addition to a function of decoding coded data downloaded from a server and displaying on a display. Thus, the client of the video hosting service functions as both the transmitting apparatus PROD_A and the receiving apparatus PROD_B.

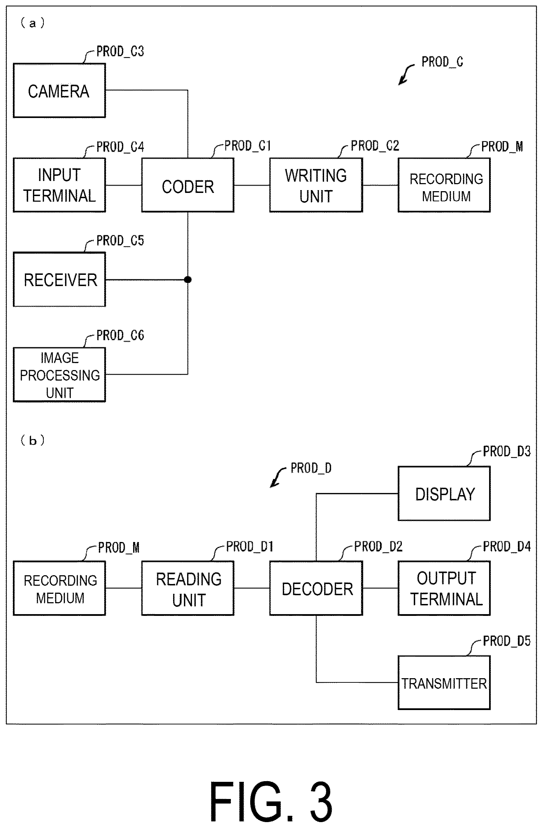

Next, referring to FIG. 3, it will be described that the above-mentioned video coding apparatus 11 and the video decoding apparatus 31 can be utilized for recording and regeneration of videos.

FIG. 3(a) is a block diagram illustrating a configuration of a recording apparatus PROD_C installed with the above-mentioned video coding apparatus 11. As illustrated in the diagram, the recording apparatus PROD_C includes a coder PROD_C1 that obtains coded data by coding a video, and a writing unit PROD_C2 that writes the coded data obtained by the coder PROD_C1 in a recording medium PROD_M. The above-mentioned video coding apparatus 11 is utilized as the coder PROD C1.

Note that the recording medium PROD_M may be (1) a type of recording medium built in the recording apparatus PROD_C such as Hard Disk Drive (HDD) or Solid State Drive (SSD), may be (2) a type of recording medium connected to the recording apparatus PROD_C such as an SD memory card or a Universal Serial Bus (USB) flash memory, and may be (3) a type of recording medium loaded in a drive apparatus (not illustrated) built in the recording apparatus PROD C such as Digital Versatile Disc (DVD: trade name) or Blu-ray Disc (BD: trade name).

In addition, the recording apparatus PROD_C may further include a camera PROD_C3 that images a video, an input terminal PROD_C4 for inputting the video from the outside, a receiver PROD_C5 for receiving the video, and an image processing unit PROD_C6 that generates or processes images, as supply sources of the video input into the coder PROD_C1. Although an example configuration that the recording apparatus PROD_C includes all of the constituents is illustrated in the diagram, some of the constituents may be omitted.

Note that the receiver PROD_C5 may receive a video which is not coded, or may receive coded data coded in a coding scheme for transmission different from the coding scheme for recording. In the latter case, a decoder for transmission (not illustrated) that decodes coded data coded in the coding scheme for transmission may be present between the receiver PROD_C5 and the coder PROD_C1.

Examples of such recording apparatus PROD C include, for example, a DVD recorder, a BD recorder, a Hard Disk Drive (HDD) recorder, and the like (in this case, the input terminal PROD_C4 or the receiver PROD_C5 is the main supply source of videos). In addition, a camcorder (in this case, the camera PROD_C3 is the main supply source of videos), a personal computer (in this case, the receiver PROD_C5 or the image processing unit C6 is the main supply source of videos), a smartphone (in this case, the camera PROD_C3 or the receiver PROD_C5 is the main supply source of videos), or the like is an example of the recording apparatus PROD_C as well.

FIG. 3(b) is a block illustrating a configuration of a reconstruction apparatus PROD_D installed with the above-mentioned video decoding apparatus 31. As illustrated in the diagram, the reconstruction apparatus PROD D includes a reading unit PROD_D1 which reads coded data written in the recording medium PROD_M, and a decoder PROD_D2 which obtains a video by decoding the coded data read by the reading unit PROD_D1. The above-mentioned video decoding apparatus 31 is utilized as the decoder PROD D2.

Note that the recording medium PROD_M may be (1) a type of recording medium built in the reconstruction apparatus PROD D such as HDD or SSD, may be (2) a type of recording medium connected to the reconstruction apparatus PROD D such as an SD memory card or a USB flash memory, and may be (3) a type of recording medium loaded in a drive apparatus (not illustrated) built in the reconstruction apparatus PROD_D such as a DVD or a BD.

In addition, the reconstruction apparatus PROD_D may further include a display PROD_D3 that displays a video, an output terminal PROD_D4 for outputting the video to the outside, and a transmitter PROD_D5 that transmits the video, as the supply destinations of the video to be output by the decoder PROD_D2. Although an example configuration that the reconstruction apparatus PROD D includes all of the constituents is illustrated in the diagram, some of the constituents may be omitted.

Note that the transmitter PROD_D5 may transmit a video which is not coded or may transmit coded data coded in the coding scheme for transmission different from a coding scheme for recording. In the latter case, a coder (not illustrated) that codes a video in the coding scheme for transmission may be present between the decoder PROD D2 and the transmitter PROD D5.

Examples of the reconstruction apparatus PROD D include, for example, a DVD player, a BD player, an HDD player, and the like (in this case, the output terminal PROD_D4 to which a television receiver, and the like are connected is the main supply destination of videos). In addition, a television receiver (in this case, the display PROD_D3 is the main supply destination of videos), a digital signage (also referred to as an electronic signboard or an electronic bulletin board, and the like, and the display PROD_D3 or the transmitter PROD_D5 is the main supply destination of videos), a desktop PC (in this case, the output terminal PROD_D4 or the transmitter PROD_D5 is the main supply destination of videos), a laptop or tablet PC (in this case, the display PROD_D3 or the transmitter PROD_D5 is the main supply destination of videos), a smartphone (in this case, the display PROD_D3 or the transmitter PROD_D5 is the main supply destination of videos), or the like is an example of the reconstruction apparatus PROD D.

Realization by Hardware and Realization by Software

Each block of the above-mentioned video decoding apparatus 31 and the video coding apparatus 11 may be realized as a hardware by a logical circuit formed on an integrated circuit (IC chip), or may be realized as a software using a Central Processing Unit (CPU).

In the latter case, each apparatus includes a CPU performing a command of a program to implement each function, a Read Only Memory (ROM) stored in the program, a Random Access Memory (RAM) developing the program, and a storage apparatus (recording medium) such as a memory storing the program and various data, and the like. In addition, an objective of the embodiment of the present invention can be achieved by supplying, to each of the apparatuses, the recording medium that records, in a computer readable form, program codes of a control program (executable program, intermediate code program, source program) of each of the apparatuses that is software for realizing the above-described functions and by reading and executing, by the computer (or a CPU or an MPU), the program codes recorded in the recording medium.

As the recording medium, for example, tapes including a magnetic tape, a cassette tape and the like, discs including a magnetic disc such as a floppy (trade name) disk/a hard disk and an optical disc such as a Compact Disc Read-Only Memory (CD-ROM)/Magneto-Optical disc (MO disc)/Mini Disc (MD)/Digital Versatile Disc(DVD: trade name)/CD Recordable (CD-R)/Blu-ray Disc (trade name), cards such as an IC card (including a memory card)/an optical card, semiconductor memories such as a mask ROM/Erasable Programmable Read-Only Memory (EPROM)/Electrically Erasable and Programmable Read-Only Memory (EEPROM: trade name)/a flash ROM, logical circuits such as a Programmable logic device (PLD) and a Field Programmable Gate Array (FPGA), or the like can be used.

In addition, each of the apparatuses is configured to be connectable to a communication network, and the program codes may be supplied through the communication network. The communication network is required to be capable of transmitting the program codes, but is not limited to a particular communication network. For example, the Internet, an intranet, an extranet, a Local Area Network (LAN), an Integrated Services Digital Network (ISDN), a Value-Added Network (VAN), a Community Antenna television/Cable Television (CATV) communication network, a Virtual Private Network, a telephone network, a mobile communication network, a satellite communication network, and the like are available. In addition, a transmission medium constituting this communication network is also required to be a medium which can transmit a program code, but is not limited to a particular configuration or type of transmission medium. For example, a wired transmission medium such as Institute of Electrical and Electronic Engineers (IEEE) 1394, a USB, a power line carrier, a cable TV line, a telephone line, an Asymmetric Digital Subscriber Line (ADSL) line, and a wireless transmission medium such as infrared ray of Infrared Data Association (IrDA) or a remote control, BlueTooth (trade name), IEEE 802.11 wireless communication, High Data Rate (HDR), Near Field Communication (NFC), Digital Living Network Alliance (DLNA: trade name), a cellular telephone network, a satellite channel, a terrestrial digital broadcast network are available. Note that the embodiment of the present invention can be also realized in the form of computer data signals embedded in a carrier such that the transmission of the program codes is embodied in electronic transmission.

The embodiment of the present invention is not limited to the above-described embodiment, and various modifications are possible within the scope of the claims. That is, an embodiment obtained by combining technical means modified appropriately within the scope defined by claims is included in the technical scope of the present invention as well.

Industrial Applicability

The embodiment of the present invention can be preferably applied to a video decoding apparatus that decodes coded data in which image data is coded, and a video coding apparatus that generates coded data in which image data is coded. The embodiment of the present invention can be preferably applied to a data structure of coded data generated by the video coding apparatus and referred to by the video decoding apparatus.

Cross-Reference of Related Application

This application claims the benefit of priority to JP 2018-245249 filed on December 27, 2018, which is incorporated herein by reference in its entirety.

Reference Signs List

    31 Image decoding apparatus
    301 Entropy decoder
    302 Parameter decoder
    3020 Header decoder
    303 Inter prediction parameter decoder
    304 Intra prediction parameter decoder
    308 Prediction image generation unit
    309 Inter prediction image generation unit
    310 Intra prediction image generation unit
    311 Inverse quantization and inverse transform processing unit

312 Addition unit
11 Image coding apparatus
101 Prediction image generation unit
102 Subtraction unit
103 Transform and quantization unit
104 Entropy coder
105 Inverse quantization and inverse transform processing unit
107 Loop filter
110 Coding parameter determination unit
111 Parameter coder
112 Inter prediction parameter coder
113 Intra prediction parameter coder
1110 Header coder
1111 CT information coder
1112 CU coder (prediction mode coder)
1114 TU coder
3091 Motion compensation unit
3095 Combining unit
30951 Combined intra/inter combining unit
30952 Triangle combining unit
30953 OBMC unit
30954 Weighted predictor
30955 GBI unit
30956 BIO unit
309561 L0 and L1 prediction image generation unit
309562 Gradient image generation unit
309563 Correlation parameter calculation unit
309564 Motion compensation refinement value derivation unit
309565 BIO prediction image generation unit
3095611 L0 and L1 interpolation image padding processing unit
3095612 Switch
3095613 L0 and L1 interpolation image weighted processing unit

## Claims

1. A prediction image generation apparatus for generating a prediction image, the prediction image generation apparatus comprising:

   an inter prediction parameter decoder configured to decode an inter prediction flag indicating any one of an L0 list prediction, an L1 list prediction, and a bi-prediction and an index related to first weighted prediction; and
   a prediction image generation unit configured to generate the prediction image by using an index value related to the first weighted prediction, wherein
   the inter prediction parameter decoder derives a first prediction list utilization flag and a second prediction list utilization flag in a case that the inter prediction flag indicates a bi-prediction, and
   the prediction image generation unit
   generates the prediction image by using bi-directional optical flow sample prediction process in a case that (i) the first prediction list utilization flag and the second prediction list utilization flag each have a value of one, (ii) the index related to the first weighted prediction has a value of zero, and (iii) a flag related to a second weighted prediction has a first value, and
   generates the prediction image by using generalized bi-prediction in a case that (i) the first prediction list utilization flag and the second prediction list utilization flag each have a value of one and (ii) the index related to the first weighted prediction does not have a value of zero.

2. The prediction image generation apparatus according to claim 1, wherein
   the bi-directional optical flow sample prediction process is processing for generating the prediction image by using a refinement value derived using a gradient image and two interpolation images.

**3.** The prediction image generation apparatus according to claim 1, wherein
the generalized bi-prediction is a prediction method for generating the prediction image by multiplying a first interpolation image and a second interpolation image by a first weight coefficient identified in a table by using the index related to the first weighted prediction and a second weight coefficient derived by using the first weight coefficient.

**4.** The prediction image generation apparatus according to claim 3, wherein
the second weight coefficient is a value obtained by subtracting the first weight coefficient from 8.

**5.** A video decoding apparatus comprising

the prediction image generation apparatus according to claim 1, wherein
a coding target image is reconstructed by adding or subtracting a residual image to or from the prediction image.

**6.** A video coding apparatus comprising

the prediction image generation apparatus according to claim 1, wherein
a residual between the prediction image and a coding target image is coded.

**7.** A prediction image generation method for generating a prediction image, the prediction image generation method comprising at least the steps of:

decoding an inter prediction flag indicating any one of an L0 list prediction, an L1 list prediction, and a bi-prediction and an index related to first weighted prediction;
deriving a first prediction list utilization flag and a second prediction list utilization flag in a case that the inter prediction flag indicates bi-prediction; and
generating the prediction image by using an index value related to the first weighted prediction, wherein
in the generating the prediction image,
the prediction image is generated by using bi-directional optical flow sample prediction process in a case that (i) the first prediction list utilization flag and the second prediction list utilization flag each have a value of one, (ii) the index related to the first weighted prediction has a value of zero, and (iii) a flag related to a second weighted prediction has a first value, and
the prediction image is generated by using generalized bi-prediction in a case that (i) the first prediction list utilization flag and the second prediction list utilization flag each have a value of one and (ii) the index related to the first weighted prediction does not have a value of zero.

1

T → | IMAGE CODING APPARATUS | Te → ⬭ → Te → | IMAGE DECODING APPARATUS | Td → | IMAGE DISPLAY APPARATUS |
11                                    21                                  31                                    41

# FIG. 1

(a)

PROD_A4
CAMERA

PROD_A

PROD_A5
RECORDING
MEDIUM

PROD_A1
CODER

PROD_A2
MODULATION
UNIT

PROD_A3
TRANSMITTER

PROD_A6
INPUT
TERMINAL

PROD_A7
IMAGE
PROCESSING
UNIT

(b)

PROD_B

PROD_B4
DISPLAY

PROD_B1
RECEIVER

PROD_B2
DEMODULATION
UNIT

PROD_B3
DECODER

PROD_B5
RECORDING
MEDIUM

PROD_B6
OUTPUT
TERMINAL

# FIG. 2

(a)

PROD_C3

CAMERA

PROD_C

PROD_C4        PROD_C1        PROD_C2        PROD_M

INPUT
TERMINAL    ──    CODER    ──    WRITING
UNIT    ──    RECORDING
MEDIUM

PROD_C5

RECEIVER

PROD_C6

IMAGE
PROCESSING
UNIT

(b)

PROD_D

PROD_D3

DISPLAY

PROD_M        PROD_D1        PROD_D2        PROD_D4

RECORDING
MEDIUM    ──    READING
UNIT    ──    DECODER    ──    OUTPUT
TERMINAL

PROD_D5

TRANSMITTER

# FIG. 3

FIG. 4

**(a)**

**(b)**
QT

**(c)**
BT (VERTICAL SPLIT)

**(d)**
BT (HORIZONTAL SPLIT)

**(e)**
TT (VERTICAL SPLIT)

**(f)**
TT (HORIZONTAL SPLIT)

**(g)**

| qt_split_cu_flag | mtt_split_cu_flag | mtt_split_cu_vertical_flag | mtt_split_cu_binary_flag | |
|---|---|---|---|---|
| 1 | – | – | – | (b) |
| 0 | 1 | 1 | 1 | (c) |
| | | | 0 | (e) |
| | | 0 | 1 | (d) |
| | | | 0 | (f) |
| 0 | 0 | – | – | (a) |

# FIG. 5

(a)

Tid

CurPic

2    B3    B4

1    B2

0    I0    P1

TIME (POC) →

0    1    2    3    4

(b)

REFERENCE PICTURE LIST OF CurPic (= B3)

refIdxL0

refIdxLX    0    1    2    3    4

L0 LIST
RefPicListL0    | I0 | B2 | P1 |    |    |

L1 LIST
RefPicListL1    | B2 | P1 | I0 |    |    |

refIdxL1

# FIG. 6

FIG. 7

FIG. 8

(a)

merge_idx

┌─────────────────────────────────────────────────────┐
│  ⌐3036                                               │
│  MERGE PREDICTION                                    │
│  PARAMETER DERIVATION UNIT                           │
│                          ⌐30361        ⌐30362        │
│  ┌──────────────┐   ┌─────────────┐   ┌─────────────┐ │
│  │ PREDICTION   │   │ MERGE       │   │ MERGE       │ │
│  │ PARAMETER    │──▶│ CANDIDATE   │──▶│ CANDIDATE   │ │
│  │ MEMORY       │   │ DERIVATION  │   │ SELECTION   │ │
│  └──────────────┘   │ UNIT        │   │ UNIT        │ │
│   ⌐307              └─────────────┘   └─────────────┘ │
└─────────────────────────────────────────────────────┘

predFlagLX
refIdxLX
mvLX

mergeCandList[]

predFlagLX
refIdxLX
mvLX

(b)

mvp_LX_idx

┌─────────────────────────────────────────────────────┐
│  ⌐3032                                               │
│  AMVP PREDICTION                                     │
│  PARAMETER DERIVATION UNIT                           │
│                          ⌐3033         ⌐3034         │
│  ┌──────────────┐   ┌─────────────┐   ┌─────────────┐ │
│  │ PREDICTION   │   │ VECTOR      │   │ VECTOR      │ │
│  │ PARAMETER    │──▶│ CANDIDATE   │──▶│ CANDIDATE   │ │
│  │ MEMORY       │   │ DERIVATION  │   │ SELECTION   │ │
│  └──────────────┘   │ UNIT        │   │ UNIT        │ │
│   ⌐307              └─────────────┘   └─────────────┘ │
└─────────────────────────────────────────────────────┘

predFlagLX
refIdxLX
mvLX

mvpListLX []

predFlagLX
refIdxLX
mvLX

# FIG. 9

INTER PREDICTION
IMAGE GENERATION UNIT

COMBINING UNIT ⌐3095    ⌐309

⌐30951

COMBINED INTRA/INTER
COMBINING UNIT

INTRA PREDICTION
IMAGE
GENERATION
UNIT 310
ADDITION UNIT
312

REFERENCE
PICTURE
MEMORY 306

⌐3091
MOTION
COMPENSATION
UNIT

⌐30952
TRIANGLE COMBINING UNIT

⌐30953
OBMC UNIT

predFlagLX
refIdxLX
mvLX, ...

⌐30954
WEIGHTED PREDICTOR

⌐30955
GBI UNIT

⌐30956
BIO UNIT

INTER PREDICTION
PARAMETER DECODER 303

INTER PREDICTION
PARAMETER DECODER 303

# FIG. 10

| gbiIndex | Weight value of $w_1$ |
|:---:|:---:|
| 0 | 4 |
| 1 | 5 |
| 2 | 3 |
| 3 | 10 |
| 4 | -2 |

# FIG. 11

FIG. 12

SUBBLOCK LOOP

2
PRED_BI

S201

0
PRED_L0

inter_pred_idc

1
PRED_L1

S203

GENERATE L1
PREDICTION IMAGE

S202

GENERATE L0
PREDICTION IMAGE

S204

bioAvailableFlag

FALSE
(BiPred)

TRUE
(BIO)

S206

BIO PROCESSING

S205

GENERATE BI-PREDICTION IMAGE

# FIG. 13

MOTION
COMPENSATION
UNIT
3091

BIO UNIT /30956

/309561
L0 AND L1
PREDICTION IMAGE
GENERATION UNIT

/309565
BIO PREDICTIO
IMAGE
GENERATION UNIT

ADDITION
UNIT
312

/309562
GRADIENT
IMAGE
GENERATION UNIT

/309563
CORRELATION
PARAMETER
CALCULATION UNIT

/309564
MOTION COMPENSATION
REFINEMENT VALUE
DERIVATION UNIT

INTER PREDICTION PARAMETER DECODER 303

# FIG. 14

FIG. 15

309561

MOTION
COMPENSATION
UNIT
3091

3095611

L0 AND L1 INTERPOLATION
IMAGE PADDING
PROCESSING UNIT

3095612    3095613

L0 AND L1 INTERPOLATION
IMAGE WEIGHTED
PROCESSING UNIT

BI-PREDICTION
IMAGE
GENERATION UNIT
309565

weightedBIOFlag

GRADIENT IMAGE
GENERATION UNIT
309562

# FIG. 16

EP 3 905 694 A1

FIG. 17

47

SUBBLOCK LOOP
PRED_BI

S301
gbiAvailableFlag
FALSE
(BiPred)

TRUE
(GBI)

S303
GBI PROCESSING

S302
bioAvailableFlag
FALSE
(BiPred)

TRUE
(BIO)

S305
weightedPredFlag
FALSE
(DefaultPred)

TRUE
(WightedPred)

S304
weightedPredFlag
FALSE
(DefaultPred)

TRUE
(WightedPred)

S309
WEIGHTED BIO PROCESSING

S308
BIO PROCESSING

S307
WEIGHTED
BI-PREDICTION PROCESSING

S306
BI-PREDICTION PROCESSING

# FIG. 18

FIG. 19

SUBBLOCK LOOP
PRED_BI

S501  FALSE
(BiPred)

bioAvailableFlag

TRUE
(BIO)

S503  FALSE
(DefaultPred)

weightedPredFlag

TRUE
(WightedPred)

S507

WEIGHTED BIO PROCESSING

S506

BIO PROCESSING

S502  FALSE
(DefaultPred)

weightedPredFlag

TRUE
(WightedPred)

S505

WEIGHTED BI
PREDICTION PROCESSING

S504

BI-PREDICTION PROCESSING

# FIG. 20

FIG. 21

FIG. 22

## INTERNATIONAL SEARCH REPORT

| International application No. |
| --- |
| PCT/JP2019/050202 |

**A. CLASSIFICATION OF SUBJECT MATTER**
Int.Cl. H04N19/577(2014.01)i, H04N19/70(2014.01)i
FI: H04N19/577, H04N19/70

According to International Patent Classification (IPC) or to both national classification and IPC

**B. FIELDS SEARCHED**

Minimum documentation searched (classification system followed by classification symbols)
Int.Cl. H04N19/00-19/98

Documentation searched other than minimum documentation to the extent that such documents are included in the fields searched

| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | BROSS, B. et al., Versatile video coding (draft 3), Joint Video Experts Team (JVET) of ITU-T SG 16 WP 3 and ISO/IEC JTC 1/SC 29/WG 11 12th Meeting: Macao, CN, 20 December 2018, pp. 34-36, 93, 94, 144-147, 152-155, [JVET-L1001-v7] (version 11), 7.3.4.6, 8.3.2.1, 8.3.6.1, 8.3.6.4, 8.3.6.5 | 1-7 |
| P, A | YE, Y. et al., AHG13: on bi-prediction with weighted averaging and weighted prediction, Joint Video Experts Team (JVET) of ITU-T SG 16 WP 3 and ISO/IEC JTC 1/SC 29/WG 11 13th Meeting: Marrakech, MA, 11 January 2019, [JVET-M0111-v2] (version 2), entire text | 1-7 |

☐ Further documents are listed in the continuation of Box C. ☐ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03.03.2020 | 17.03.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018245249 A

**Non-patent literature cited in the description**

- Versatile Video Coding (Draft 3). *JVET-L1001, Joint Video Exploration Team (JVET) of ITU-T SG 16 WP 3 and ISO/IEC JTC 1/SC 29/WG 11,* 2018

- CE9-related: Complexity reduction and bit-width control for bi-directional optical flow (BIO). *JVET-L0256, Joint Video Exploration Team (JVET) of ITU-T SG 16 WP 3 and ISO/IEC JTC 1/SC 29/WG 11,* 2018